# EUROPEAN PATENT SPECIFICATION

(11) **EP 1 670 176 B1**
(45) Date of publication and mention of the grant of the patent: **30.03.2016**
(21) Application number: 05256068.7
(22) Date of filing: 29.09.2005
(51) Int. Cl.: H04L 12/24

(54) **Transmission of setting data**
Senden von Einstelldaten
Transmission de données d'établissement

(30) Priority: 10.12.2004 JP 2004359160
(43) Date of publication of application: 14.06.2006
(73) Proprietor: Brother Kogyo Kabushiki Kaisha, Nagoya-shi, Aichi-ken 467-8561 (JP)
(72) Inventor: Kawai, Sunao, Brother Kogyo Kabushiki Kaisha, Nagoya-shi Aichi-ken 467-8562 (JP)
(74) Representative: Smith, Samuel Leonard

(56) References cited:
- EP-A- 0 871 123
- WO-A-03/105353
- US-A- 5 857 073
- US-A1- 2003 046 415

## Description

### Background of the Invention

### Technical Field

The present invention relates to a method, device, system and computer program product for transmitting setting data to devices on a network.

### Description of Related Art

Conventionally, a technique is used for transmitting setting data from a single device to a plurality of devices simultaneously via a network. An example of such a technique is described in Japanese Patent Provisional Publication No. HEI9-149076 (hereafter, referred to as JP HEI 9-149076). According to the technique disclosed in JP HEI 9-149076, setting data for facsimile devices is prepared in a server, and the setting data is transmitted from the server to the facsimile devices concurrently.

According to the technique, it is unnecessary to conduct an individual setting operation for each of the facsimile devices. Therefore, setting the facsimile devices becomes easy.

However, according to the technique disclosed in JP HEI 9-149076, if transmission errors occur between the server and some devices during the transmission of settings from the server to the facsimile devices, a user is required to conduct troublesome operations to retransmit settings from the server to the devices involved in the transmission errors. More specifically, for retransmission of settings to the devices involved in the transmission errors, a user is required to select devices to be subjected to the retransmission of settings and then to restart the transmission of settings to the selected devices. Therefore, the user is required to memorize (or make a note of) devices involved in transmission errors during the transmission of settings from the server to the facsimile devices because in JP HEI 9-149076 only discloses that an error message is displayed by the server if a transmission error occurs during data transmission between the server and one of the facsimile devices.

WO 03/105353 describes an improved system and method of transmitting messages to multiple destination nodes, in which a message from a source node is addressed to a multicast-broadcast address, and multiple destination node addresses are included in the messages header. Destination nodes which successfully receive the transmission calculate a timeslot in which to transmit an acknowledgement message based on the position of their address in the message header. The source node can then provide a retransmission to destination nodes which did not successfully receive the transmission as either a multicast-broadcast or a unicast communication depending on acknowledgement messages received.

US 2003/0046415 describes a file transmitting method and system for transmitting and receiving a very large file with high reliability and with efficiency using the Internet, which is apt to be unstable, without special operation in a client PC. A file transmitting system is configured as a system in which a client PC is connected via Internet to a processing system comprising a WWW server, a management terminal server, an AP server, and a file server. Transmission of file data between a PC and a transfer file of the file server is performed using HTTPS (HyperText Transfer Protocol Secure) that uses a dedicated program. The file data is divided into data having a fixed size, each of which is compressed for transmission. In addition, in preparation for occurrence of a failure, a check-point for retransmission is provided for each divided data. The dedicated program is devised so that multi-platform is supported. In addition to it, the dedicated program can be used by downloading it from the server as part of PC operation.

### Summary

Illustrative aspects may be advantageous in that they provide a method, device, system and computer program for transmitting setting data configured to allow a user to securely retransmit setting data to target devices which are involved in transmission errors during a data transmission process of transmitting the setting data to multiple devices simultaneously.

According to an illustrative aspect of the invention, there is provided a method of transmitting setting data as defined in appended claim 1.

With this configuration, it becomes possible to transmit the new setting data to target devices concurrently. In addition, devices which need the retransmission of setting data may be automatically selected and the new setting data may be securely transmitted such devices which need the retransmission of setting data. Therefore, it is unnecessary for the user to memorize (or make a note of) such devices.

With this configuration, it is possible to execute the judging step in accordance with the error condition.

There are various types of factors which cause the transmission error. Therefore, it is preferable that error condition is classified into the first type group and the second type group because the terminal device can determine whether to execute the retransmission, for each of the target devices, based on thus classified error condition.

With this configuration, the retransmission of the new setting data can be securely executed for devices which are judged that the retransmission is required.

Optionally, the method may include the steps of displaying the result of the step of transmitting before the step of retransmitting, and allowing a user to decide whether to initiate the step of retransmitting.

With this configuration, the user is allowed to know that some devices (or one device) are involved in the transmission error and thereafter to start the retransmission process for the devices involved in the transmission error.

Still optionally, the step of transmitting may include the steps of inquiring to each of the plurality of target devices to check whether each of the plurality of target devices is capable of carrying out data communications, and obtaining a result of the step of inquiring. In this case, the result of the step of inquiring may be used for the step of judging.

With this configuration, information indicating whether the target device is capable of carrying out the data communications can be obtained, and the information can be used of the judging step.

Still optionally, the step of transmitting may include the steps of requesting the plurality of target devices to perform authentication, and obtaining a result of the authentication from the plurality of the target devices, wherein the result of the authentication is used for the step of judging.

With this configuration, information indicating whether the target device is capable of carrying out the data communications can be obtained, and the information can be used of the judging step.

Still optionally, the step of transmitting may include the steps of inquiring to one of the plurality of target devices to check whether the one of the plurality of target devices is in a setting-locked state, and receiving a result of the inquiring. In this case, the result of the inquiring may be used for the step of judging.

With this configuration, information about whether the device is in the setting-locked state is obtained, and the information can be used for the judging step.

Optionally, the judging step may include the steps of judging whether, for each of the plurality of target devices, the transmission is successfully finished, and storing a result of the step of judging the transmission is successfully finished in a memory in the terminal device. Further, the retransmitting step may include the steps of specifying a device which failed in the transmission based on the result of the step of judging the transmission is successfully finished, and retransmitting the new setting data to the specified device.

Only devices that succeeded in the transmitting may be stored in the memory. In this case the retransmission may be executed for all of the devices in the memory. Alternatively, all of the target devices including devices that succeeded in the transmitting and devices that failed in the transmitting may be stored in the memory, together with additional information (e.g., flags) indicating the result of the transmission. In this case, the devices that failed in the transmission can be specified by the additional information.

Still optionally, the method may include the steps of judging whether, for each of the plurality of target devices, the transmission is successfully finished, displaying a list containing a result of the step of judging the transmission is successfully finished, deleting a device which succeeded in the transmission from the list if a retransmission command is inputted by a user, and displaying again the list.

With this configuration, the user is able to identify devices that succeeded in the transmission and devices that failed in the transmission by checking the displayed list. Since the list from which the devices that succeeded in the transmission are removed is displayed again, it is prevented that the user mistakes the successful devices for the unsuccessful devices.

Still optionally, the step of retransmitting may include the step of requesting the plurality of target devices to perform authentication before retransmitting the new setting data.

With this configuration, it becomes possible to perform the retransmission for devices that require authentication.

Still optionally, the step of requesting the authentication may include the step of displaying a password input screen for requesting a user to input a password for the authentication.

With this configuration, it becomes possible to execute the retransmission for devices that require a password in the authentication.

Still optionally, the step of retransmitting may be executed by removing a device which succeeded in the transmitting from the plurality of target devices and performing again the transmitting step and the judging step.

By re-executing the transmitting step and the judging step for unsuccessful devices, retransmission of the new setting data can be attained.

Optionally, the method includes the steps of preparing a plurality of pieces of new setting data for the plurality of target devices, respectively, transmitting the plurality of pieces of new setting data to the plurality of target devices, respectively, judging whether retransmission of the plurality of pieces of new setting data is needed for each of the plurality of target devices based on a result of the step of transmitting, and retransmitting one of the plurality of pieces of new setting data to at least one device which is judged to need retransmission.

With this configuration, it becomes possible to transmit the new setting data to target devices concurrently. In addition, devices which need the retransmission of setting data are automatically selected and the new setting data is securely transmitted such devices which need retransmission of setting data. Therefore, it is unnecessary for the user to memorize (or make a note of) such devices.

According to another illustrative aspect of the invention, there is provided a terminal device as defined in appended claim 13.

With this configuration, it becomes possible to transmit the new setting data to target devices concurrently. In addition, devices which need the retransmission of setting data are automatically selected and the new setting data is securely transmitted to devices which need the retransmission of setting data. Therefore, it is unnecessary for the user to memorize (or make a note of) such devices.

Optionally, the terminal device may include a selecting system that allows a user to designate the target devices from among devices.

According to another illustrative aspect of the invention, there is provided a system as defined in appended claim 15.

With this configuration, it becomes possible to transmit the new setting data to multiple target devices concurrently. In addition, devices which need the retransmission of setting data are automatically selected and the new setting data is securely transmitted to devices which need the setting data retransmitted. Therefore, it is unnecessary for the user to memorize (or make a note of) such devices.

Optionally, the system may include selecting system that allows a user to designate the target devices from among devices.

An illustrative device and method according to the present invention can be realized when appropriate programs are provided and executed by a computer. Such programs may be stored on a recording medium such as a flexible disk, CD-ROM, memory cards and the like and distributed. Alternatively or optionally, such programs can be distributed through networks such as the Internet.

### Brief Description of the Accompanying Drawings

Fig. 1 is a general configuration of a network system in which a setting data transmission system.
Fig. 2 illustrates a device setting management tool initial screen.
Fig. 3 is a diagram for explaining a user operation conducted on the device setting management tool initial screen.
Fig. 4 illustrates a printer setting function initial screen.
Fig. 5 is a diagram for explaining a user operation conducted on the printer setting function initial screen.
Fig. 6 illustrates a NIC (network interface card) setting dialog box.
Fig. 7 is a general flowchart applied to first and second data setting transmission process.
Fig. 8 is a flowchart of a "Send Settings to Printer(s)" dialog process.
Fig. 9 illustrates a "Send Settings to Printer(s)" dialog box.
Fig. 10 illustrates an example where grayed out representation in the "Send Settings to Printer(s)" dialog box is released.
Fig. 11 is a flowchart illustrating a process for adding a designated device in a device list.
Fig. 12 is a flowchart illustrating a process for searching for devices and for updating the device list.
Fig. 13 is flowchart illustrating a transmission confirmation dialog process.
Fig. 14 illustrates a transmission confirmation dialog box.
Fig. 15 is a flowchart illustrating a device setting acquisition process.
Fig. 16 illustrates an example where grayed out representation of the transmission confirmation dialog box is released.
Fig. 17 is a flowchart illustrating an advanced setting change window process.
Fig. 18 illustrates an advanced setting change window of the first data setting transmission process.
Fig. 19 illustrates an advanced setting change window of the second data setting transmission process.
Fig. 20 is a flowchart illustrating a setting change process.
Fig. 21 illustrates a setting change dialog box.
Fig. 22 is a flowchart illustrating a setting data package transmission process.
Fig. 23 illustrates a password input dialog box displayed in the setting data package transmission process of Fig. 22.
Fig. 24 illustrates a transmission result dialog box displayed in the setting data package transmission process of Fig. 22.
Fig. 25 is a flowchart illustrating a NIC setting dialog displaying process.
Fig. 26 is a variation of the device setting acquisition process shown in Fig. 15.
Fig. 27 is a variation of the setting data package transmission process of Fig. 22.

### Detailed Description of the Embodiments

Hereafter, an illustrative embodiment according to the invention will be described with reference to the accompanying drawings.

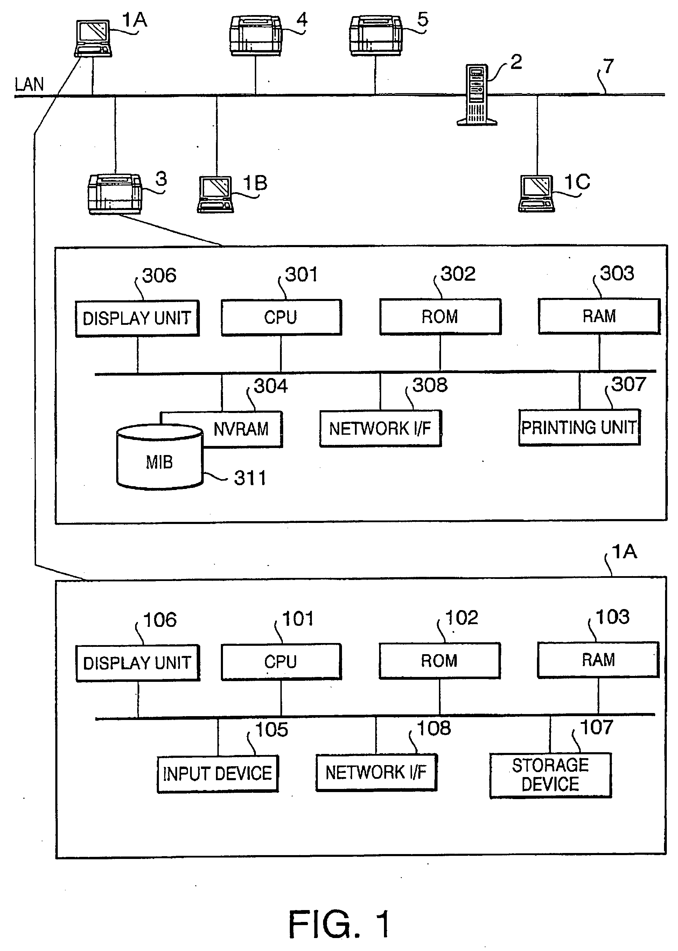

Fig. 1 is a general configuration of a network system in which a setting data transmission system according to an illustrative embodiment of the invention is implemented. The network system shown in Fig. 1 includes a plurality of PCs (personal computers) 1A, 1B and 1C, a router 2, a plurality of printers 3,4 and 5, and a LAN (local area network) 7 for connecting these nodes.

According to the illustrative embodiment, the PCs 1A, 1B and 1C have the same configuration, and in Fig. 1, a block diagram of the PC 1A is illustrated as an example. As shown in Fig. 1A, the PC 1A includes a CPU (central processing unit) 101, a ROM (read only memory) 102, a RAM (random access memory) 103, an input device 105 such as a keyboard and a pointing device, a display unit 106, a storage device 107 such as a hard disc drive, and a network I/F (interface) 108 for connecting the PC 1A to the LAN 7. A multi-task operating system such as Windows ®, Linux ®, or MacOS ® is installed in the PCs 1A, 1B and 1C. The following explanation is made on the assumption that Windows ® is installed in the PCs 1A, 1B and 1C. The CPU 101 of the PC 1A executes tasks of a plurality of programs in parallel on a time-division basis in accordance with a multi-task function of the OS. A setting data transmission process (which is explained in detail later) according to the illustrative embodiment is executed as one of such parallel tasks.

In this illustrative embodiment, the setting data transmission process is executed such that setting data is transmitted to a plurality of devices concurrently.

The router 2 has the function of relaying data from one network to another network. Since the printers 3, 4 and 5 have the same configuration, in Fig. 1 a block diagram of the printer 3 is illustrated as an example. As shown in Fig. 1, the printer 3 includes s a CPU (central processing unit) 301, a ROM (read only memory) 302, a RAM (random access memory) 303, a NVRAM (non volatile RAM) 304, a display unit 306 on which various types of messages are displayed, a printing unit 307 having the function of printing images on a recording medium, and a network I/F (interface) 308 for connecting the printer 3 to the LAN 7. As described in detail later, in the setting data transmission process, the PC 1A (1B or 1 C) operates, for example, to obtain setting data from one of the printers 3, 4 and 5 and to transmit setting data to the printers 3, 4 and 5 simultaneously.

In this illustrative embodiment, data transmission between the PCs and the printers is performed based on a simple network management protocol (SNMP). Each of the printers 3 to 5 is configured to store a management information base (for example, a MIB 311 stored in the NVRAM 304 of the printer 3). For obtaining setting data from one of the printers 3 to 5, the PC 1A sends a data acquisition request based on SNMP to a target printer (one of the printers 3 to 5). Then, the target printer provides setting data in an MIB (e.g. the MIB 311 of the printer 3), which is managed by and stored in the target printer, for the PC 1A as a response to the data acquisition request.

For setting a target printer (one of the printers 3 to 5), the PC 1A sends a data setting request based on SNMP containing setting data to the target printer. Then, the target printer stores the received setting data in its own MIB (e.g. the MIB 311 of the printer 3) as a response to the data setting request sent by the PC 1A.

Hereafter, the setting data transmission process performed between the PCs and the printers will be explained. The setting data transmission process includes two types of transmission processes: a first type process for setting a principal function of a printing device (e.g. a printer, a multi-function product having a printing function); and a second type process for setting a network function of a NIC (a network interface card, for example, the network I/F 308 of the printer 3) provided in the printing device. Hereafter, the first type process is referred to as a first data setting transmission process, and the second type process is referred to as a second data setting transmission process.

Since general flows of the first and second data setting transmission processes are substantially the same, explanation of the data setting transmission process is made without making a distinction between the first and the second data setting transmission processes. Therefore, in the following, differences between the first and second data setting transmission processes will be explained, only if the necessity arises.

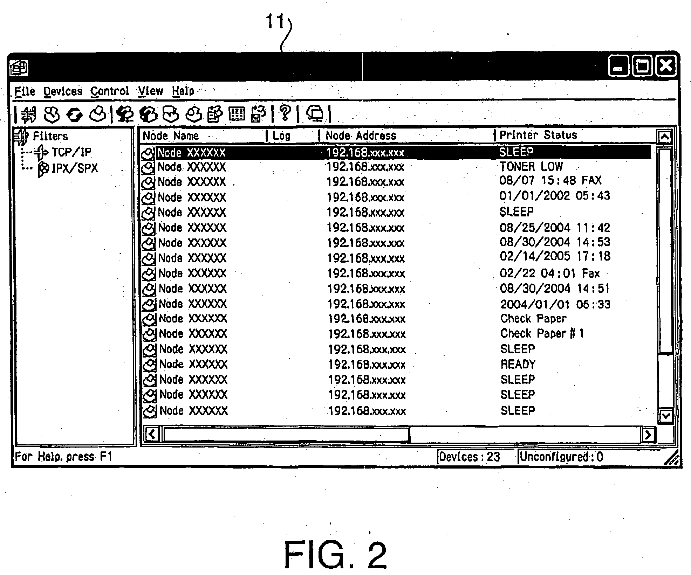

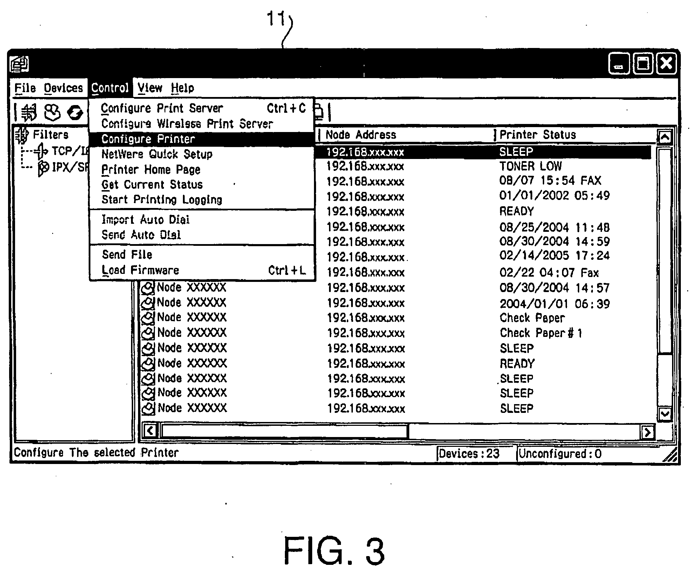

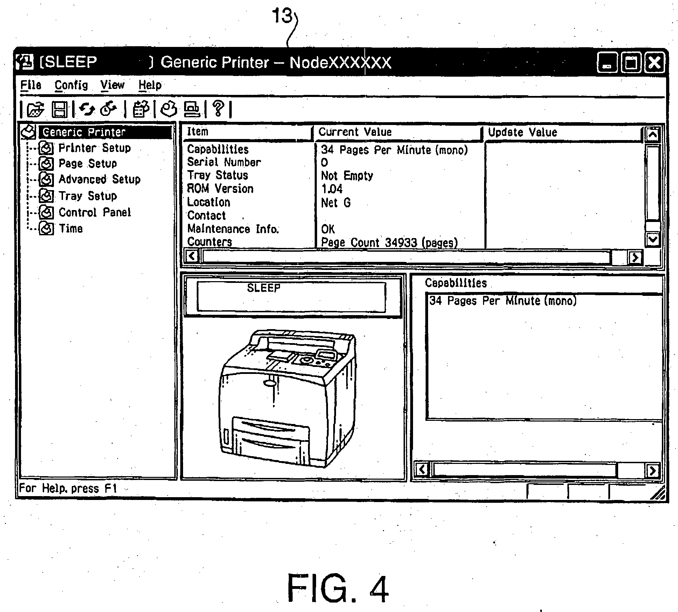

First, user interfaces (UI) of the first and second data setting transmission processes are explained. To start the first data setting transmission process, a user operates the PC 1A to initiate a device setting management tool. If the device setting management tool is initiated, a device setting management tool initial screen 11 is displayed, for example as a window, on the display unit 106 of the PC 1A as shown in Fig. 2. In the initial screen 11 of Fig. 2, a list of printing devices (e.g. printers or multi-function products) detected on the network is displayed. If a user selects one of the printing devices listed in the device setting management tool initial screen 11 as a representative device, clicks "Control" (i.e. selecting "Control" first by using a pointing device and then pushing a button on the pointing device) on a menu bar on the device setting management tool initial screen 11, and then clicks "Configure printer" in a pull-down menu displayed under the "Control" menu (see Fig. 3), a printer setting function initial screen 13 is displayed as shown in Fig. 4.

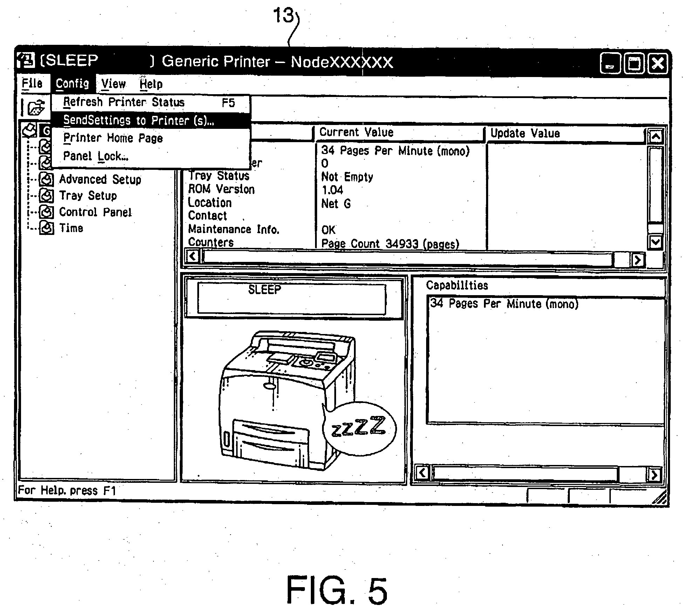

The printer setting function initial screen 13 is used to perform the configuration of printing devices (e.g. printers or multi function products). As shown in Fig. 4, in the printer setting function initial screen 13, various types of current settings of the printing device selected in the device setting management tool initial screen 11 (i.e. the representative device) are displayed. By clicking "Config" in a menu bar on the printer setting function initial screen 13, and then clicking "Send Settings to Printer(s)" in a pull-down menu displayed under the "Config" menu (see Fig. 5), the PC 1A initiates the first data setting transmission process.

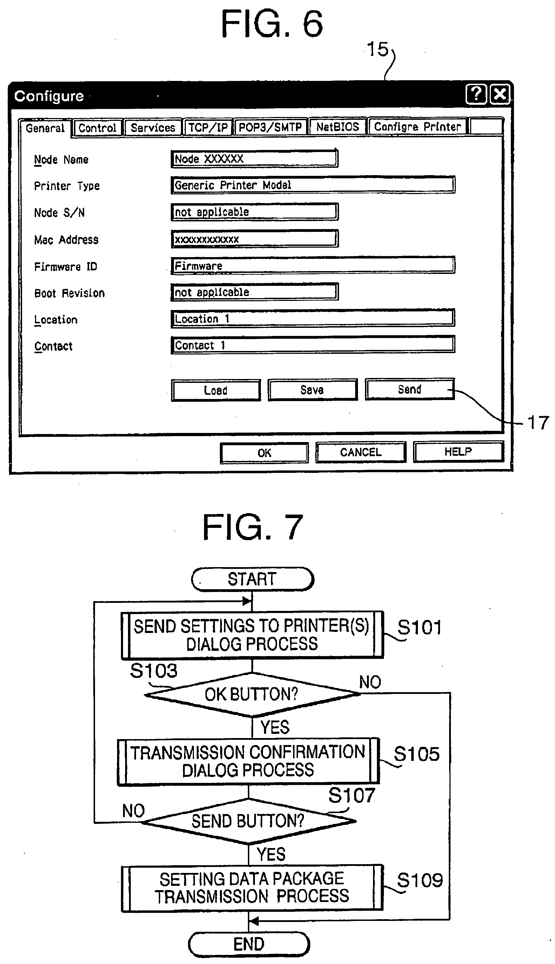

For initiating the second data setting transmission process, a user double clicks one of the printing devices listed in the device setting management tool initial screen 11 after opening the device setting management tool initial screen 11, or a user clicks "Control" in the menu bar on the device setting management tool initial screen 11 and then clicks "Configure Print Server" in the pull-down menu. Then, a NIC setting dialog box 15 shown in Fig. 6 is displayed. By clicking a "Send" button 17 in a "General" tab on the NIC setting dialog box 15, the PC 1A initiates the second data setting transmission process.

Fig. 7 is a general flowchart applied to both the first and second data setting transmission process executed under control of the CPU 101 of the PC 1A (1B or 1C). After the initiation of the first or second data setting transmission process, a "Send Settings to Printer(s)" dialog process (step S101) is executed.

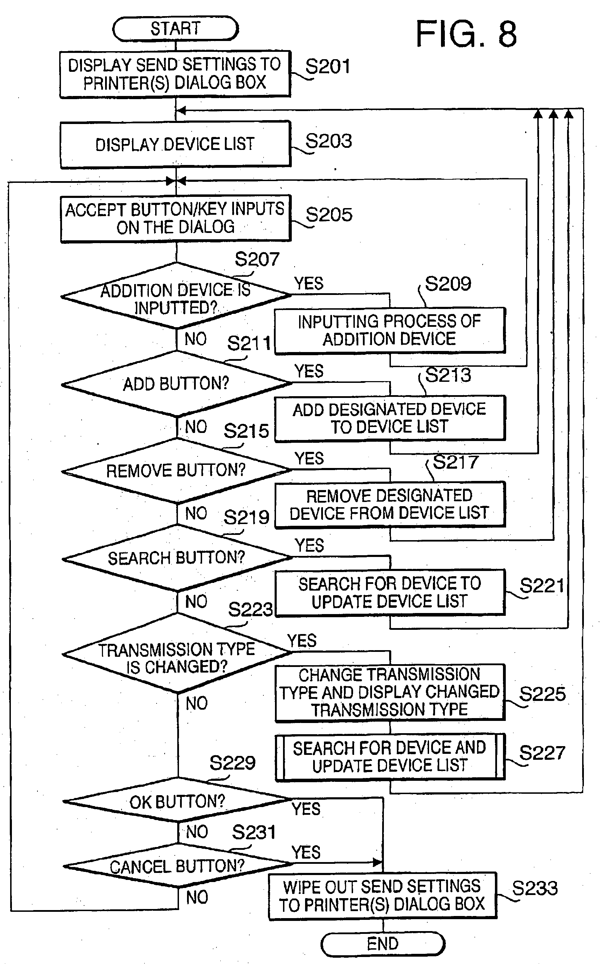

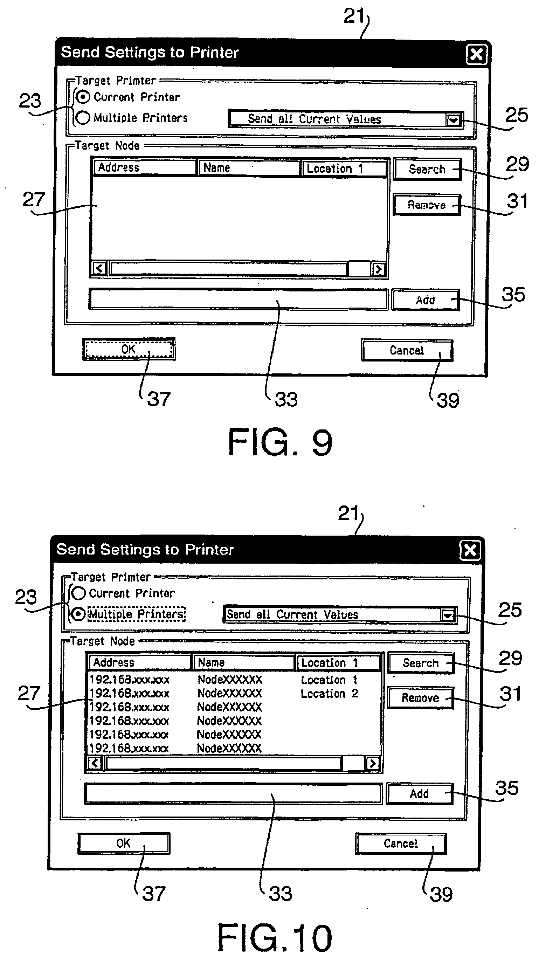

Fig. 8 is a flowchart of the "Send Settings to Printer(s)" dialog process. After the "Send Settings to Printer(s)" dialog process is initiated, the PC 1A displays a "Send Settings to Printer(s)" dialog box 21 on the display unit 106 as shown in Fig. 9 (step S201). As shown in Fig. 9, the "Send Settings to Printer(s)" dialog box 21 includes a transmission target selection radio button 23, a transmission type changing instruction field 25, a device list indication field 27, a "Search" button 29, a "Remove" button 31, an additional device input text box 33, an "Add" button 35, an "OK" button 37, and a "Cancel" button 39.

At an initial condition of the "Send Settings to Printer(s)" dialog box 21, the transmission target selection radio button 23 is set to "Current Printer", and the transmission type changing instruction field 25, the device list indication field 27, the "Search" button 29, the "Remove" button 31, the additional device input text box 33, and the "Add" button 35 are grayed out (a grayed out item represents that the item is currently inactive).

If the user sets the transmission target selection radio button 23 to "Multiple Printer", the grayed out representation of the transmission type changing instruction field 25, the device list indication field 27, the "Search" button 29, the additional device input text box 33, and the "Add" button 35 is released. If the grayed out representation is released, a selection among instructions of"1: Send all Current Values", "2: Send all Update Values" and "3: Send Current and Update Values" is enabled in the transmission type changing instruction field 25. The grayed out representation of the "Remove" button 31 is also released if one or more devices are. displayed in the device list indication field 27.

After the "Send Settings to Printer(s)" dialog box 21 described above is displayed, the PC 1A displays a device list (i.e. contents to be displayed in the device list indication field 27) of the "Send Settings to Printer(s)" in step S203. As described above, the device list indication field 27 is grayed out and no item is displayed in the device list indication field 27 in the initial condition (see Fig. 9). If the user sets the transmission target selection radio button 23 to "Multiple Printers" in a later stage, the grayed out representation is released and a search for detecting devices on the network is initiated automatically. Devices detected by the search are registered in the device list and are displayed in the device list indication field 27 as shown in Fig. 10.

After the step S203 is finished, the PC1 accepts inputs of buttons and keys on the "Send Settings to Printer(s)" dialog box 21 (step S205). In step S205, the user can conduct the switching operation of the transmission target selection radio button 23, an address inputting operation in the additional device input text box 33, and a pressing operation of the "Search" button 29, the "Remove" button 31, the "Add" button 35, the "OK" button 37, or the "Cancel" button 39.

If an address is inputted in the additional device input text box 33 (S207:YES), an inputting process for obtaining character strings inputted in the additional device input text box 33 is executed in step S209. Then, control returns to step S205.

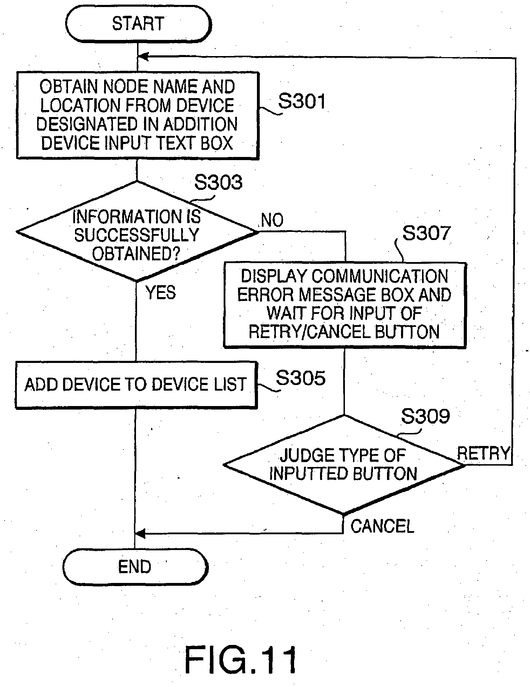

If an address is not inputted in the additional device input text box 33 (S207:NO), control proceeds to step S211 where it is judged whether the "Add" button 35 is pressed. If the "Add" button is pressed (S211:YES), a process for adding a device designated in the additional device input text box 33 to the device list is executed (S213). Fig. 11 is a flowchart illustrating the process executed in step S213.

As shown in Fig. 11, the PC 1A operates to obtain information including a node name and a location from a device having the address designated in the additional device input text box 33 (step S301). If the acquisition of the device information is successfully completed (S303:YES), the device is added to the device list (step S305). As a result, information regarding the device having the address designated in the additional device input text box 33 is additionally displayed in the device list indication field 27.

If the acquisition of the device information is not successfully completed (S303:NO), the PC 1A displays a message box of a communication error and waits for an input of a "Retry/Cancel" buttons (S307). If the user presses one of the "Retry/Cancel" buttons, control proceeds from step S307 to step S309. If the button pressed by the user is "Retry" button (S309:Retry), control returns to S301. If the button pressed by the user is "Cancel" button (S309:Cancel) or the step S305 is finished, the process of Fig. 11 terminates. The completion of the process shown in Fig. 11 corresponds to completion of step S213 of Fig. 8.

Returning now to Fig. 8, after step S213 is finished, control returns to step S203.

If the "Add" button is not pressed (S211:NO), control proceeds to step S215 where it is judged whether the "Remove" button 31 is pressed. If the "Remove" button 31 is pressed (S215:YES), a designated device is removed from the device list (S217). Then, control returns to step S203. To designate a device to be removed from the device list, a user selects a device to be removed from devices listed in the device list indication field 27 and then presses the "Remove" button 31.

If the "Remove" button 31 is not pressed (S215:NO), control proceeds to step S219 where it is judged whether the "Search" button 29 is pressed. If the "Search" button 29 is pressed (S219:YES), the PC 1A operates to search for devices on the network to update the device list (step S221). More specifically, in step S221, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the data setting transmission process, updates the device list with regard to the responding devices, and then adds the responding devices to the device list indication field 27. After the process of step S221 is finished, control returns to step S203.

If undesired devices which are not to be targeted for the data setting transmission process responded to the packet, the user may delete such undesirable devices using the "Remove" button 31.

If the "Search" button 29 is not pressed (S219:NO), control proceeds to step S223 where it is judged whether an operation for changing the instruction of transmission type by using the transmission target selection radio button 23 and the transmission type changing instruction field 25 is conducted. If a user operation for changing the instruction of transmission type is conducted (S223:YES), representation of the transmission types changing instruction field 25 is changed in accordance with the changed transmission type, and then the "Send Settings to Printer(s)" dialog box 21 is refreshed (S225).

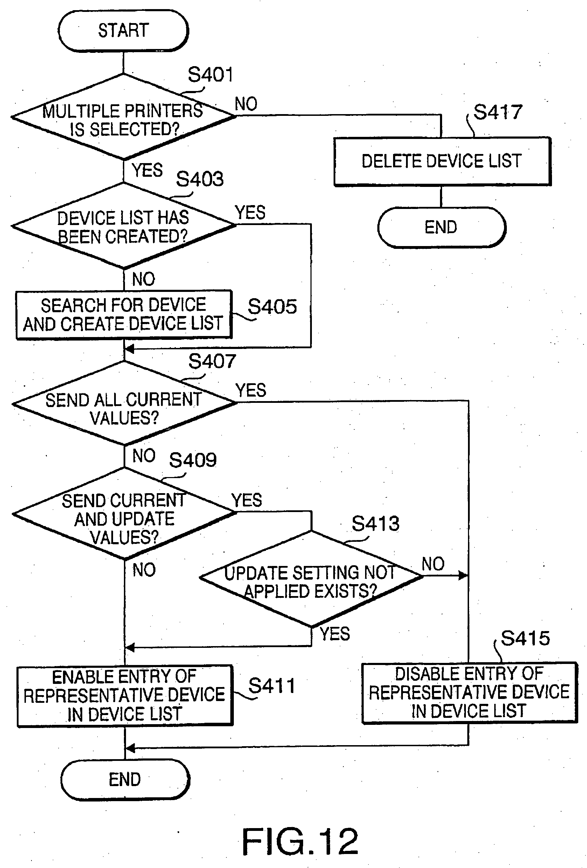

Then, a process of step S227, which is illustrated in detail in Fig. 12, is executed. In step S227, an operation for searching for devices and an operation for updating the device list are executed on an as needed basis.

As shown in Fig. 12, firstly, the PC 1A judges whether "Multiple Printer" is selected in the transmission target selection radio button 23 (S401). If "Multiple Printer" is selected (S401:YES), control proceeds to step S403. In step S403, it is judged whether the device list has been created or not. If the device list has not been created (S403:NO), the device list is created in step S405 and control proceeds to step S407. If the device list has been created (S403:YES), control proceeds to step S407.

In step S407, it is judged whether "Send all Current Values" is designated in the transmission type changing instruction field 25. In step S409, it is judged whether "Send Current and Update Values" is selected in the transmission type changing instruction field 25. If the "Send all Current Values" is not designated (S407:NO) and "Send Current and Update Values" is not designated (S409:NO), the instruction designated in the transmission type changing instruction field 25 is "Send all Update Values". In this case, in step S411, the device list is modified such that an entry of the representative device, which is selected as the representative device on the UI (i.e., the device setting management tool initial screen 11) displayed before the initiation of the data setting transmission process, is set as valid data.

If the "Send all Current Values" is not designated (S407:NO) and "Send Current and Update Values" is designated (S409:YES), control proceeds to step S413. In step S413, it is checked whether update settings not applied to the representative device exist. If the update settings not applied to the representative device exist (S413:YES), the device list is modified such that the entry of the representative device is set as valid data (S411). If the update settings have been applied to the representative device (S413:NO), control proceeds to step S415 where the entry of the representative device in the device list is designated as invalid data.

If the "Send all Current Values" is designated in the transmission type changing instruction field 25 (S407:YES), control proceeds to step S415 where the entry of the representative device in the device list is designated as invalid data.

If it is judged in step S401 that "Multiple Printers" is not selected on the transmission target selection radio button 23 (S401:YES), the selection result on the transmission target selection radio button 23 is "Current Printer". In this case, the device list is deleted (S417). After completion of step S411, S415, or S417, the process of Fig. 12 terminates. The termination of the process of Fig. 12 corresponds to the termination of step S227 of Fig. 8.

Referring now to Fig. 8, after completion of step S227, control returns to S203. If the user operation for changing the instruction of transmission type is not conducted (S223:NO), control proceeds to step S229. In step S229, it is judged whether the "OK" button 37 is pressed. In step S231, it is judged whether the "Cancel" button 39 is pressed. If the "OK" button 37 or the "Cancel" button is pressed (S229:YES or S231 :YES), control proceeds to step S233. In step S233, the "Send Settings to Printer(s)" dialog box 21 is wiped out. The "Cancel" button 39 is used to instruct the PC 1A to stop a current process, and the "OK" button 37 is used to instruct the PC 1A to continue a current process. The selection result between the "OK" button 37 and the "Cancel" button 39 is used in step S103 of Fig. 7.

If it is judged in step S231 that the "Cancel" button 39 is not pressed (S231;NO), control returns to step S205 since no effective operation is conducted.

After completion of step S233, the process for "Send Settings to Printer(s)" terminates and also the step S101 of Fig. 7 terminates.

Referring now to Fig. 7, after completion of step S101, the PC 1A judges whether the button pressed in step S205 is the "OK" button 37 (S103). If the "OK" button 37 is not pressed (S103:NO), the data setting transmission process terminates since in this case the pressed button is the "Cancel" button 39.

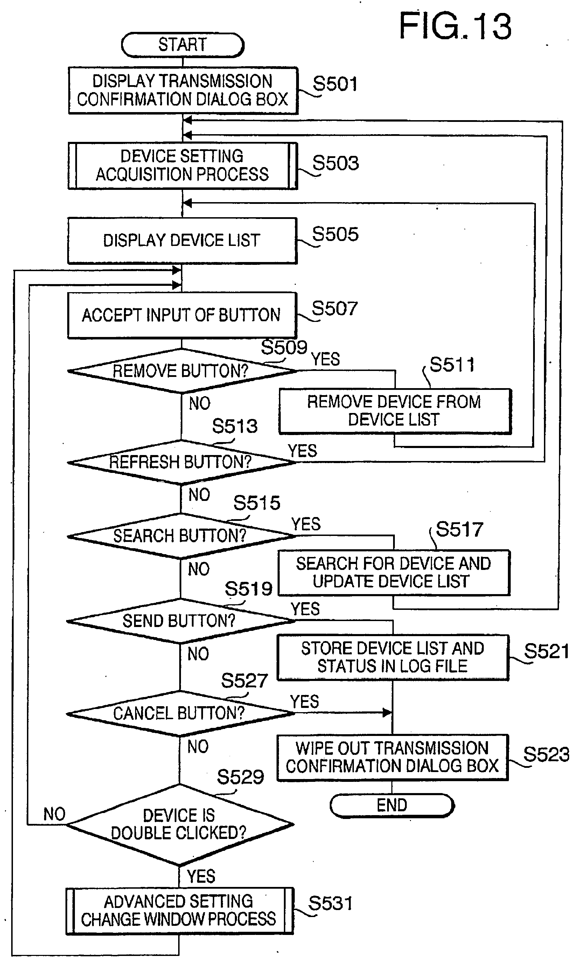

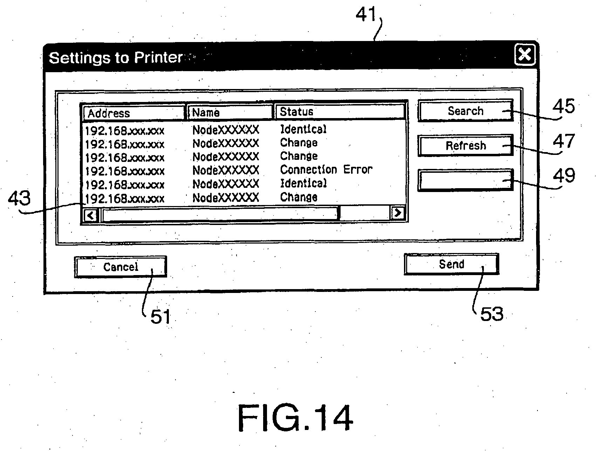

If the "OK" button 37 is pressed (S103:YES), a transmission confirmation dialog process is executed in step S105. Fig. 13 is flowchart illustrating the transmission confirmation dialog process. Firstly, in step S501 the PC 1A displays a transmission confirmation dialog box 41 on the display unit 106 as shown in Fig. 14. In the transmission confirmation dialog box 41, information on whether setting data is to be changed or not, and information on whether devices are in an operable state are displayed for each of the devices. As shown in Fig. 14, the transmission confirmation dialog box 41 includes a device list display field 43, a "Search" button 45, a "Refresh" button 47, a "Remove" button 49, a "Cancel" button 51, and a "Send" button 53. As described in detail later, information regarding the device list is displayed in the device list display field 43 in step S505.

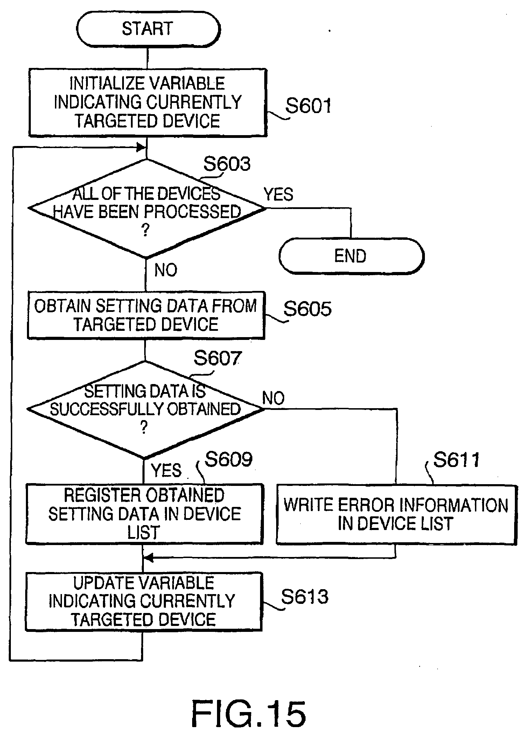

After the transmission confirmation dialog box 41 is displayed in step S501, the PC 1A executes a device setting acquisition process in step S503. Fig. 15 is a flowchart illustrating the device setting acquisition process.

As shown in Fig. 15, firstly, the PC 1A initializes a variable *i* (the number) indicating a device currently targeted for acquisition of device setting (S601). The variable *i* is used to process devices one by one from the top of the device list. It is noted that a device list used in the device setting acquisition process is created in the "Send Settings to Printer(s)" dialog process, and the device list may be modified in the device setting acquisition process.

To point at a device listed at the top of the device list, the variable *i* is assigned 1 (i.e. *i*=1) in step S601. Next, the PC 1A judges whether all of the devices in the device list have been processed or not (S603). Specifically, in step S603 the PC 1A judges whether a condition i≤n (where n represents the total number of devices in the device list) holds or not. If all of the devices in the device list have not been processed (S603:NO), control proceeds to step S605. In step S605, setting data is obtained from a current device (a device designated by the variable *i*).

More specifically, the acquisition of setting data from the current device is executed as follows. The PC 1 A sends a data acquisition request to the current device based on SNMP. Then, the current device (which has received the data acquisition request) sends setting data stored in the MIB (e.g. the MIB 311 of the printer 3) managed by the current device to the PC 1A in response to the data acquisition request. Setting items to be obtained from the current device vary depending on the transmission type designated in the transmission type changing instruction field 25 of the "Send Settings to Printer(s)" dialog box 21. That is, if the transmission type is "Send all Current Values" or "Send Current and Update Values", setting data of all of the setting items is obtained from the current device. If the transmission type is "Send all Update Values", only setting data of setting items to be updated is obtained from the current device. In this embodiment, the term "setting items" means items which are predetermined, for each of device models, as target items to be processed in the data setting transmission process and does not cover all setting items supported by a current device.

Next, in step S607, the PC 1A judges whether the setting data is successfully obtained from the current device. If the setting data is successfully obtained (S607:YES), the obtained setting data is registered in the device list (in a corresponding entry of the device list) (S609). Status information "Identical" is also registered in the corresponding entry of the device list if all of the obtained setting data is identical to setting data to be sent to the current device. Status information "Change" is registered in the corresponding entry of the device list if all of the obtained setting data is not identical to setting data to be sent to the current device.

If the setting data is not successfully obtained (S607:NO), control proceeds to step S611. In step S611, error information is registered in the corresponding entry of the device list. Specifically, in this case, status information "Connection error" may be registered in the corresponding entry of the device list. If the process in step S609 or S611 is finished, the variable i indicates the current device being updated (S613). Then, control returns to step S603. For example, the variable i may be incremented by one in step S613.

By repeating a sequence of steps S603 to S613, entries in the device list are processed one by one until all of the devices in the device list are completely processed. If all of the devices in the device are processed (S603:YES), the device setting acquisition process of Fig. 15 terminates. Although, in the process shown in Fig. 15, the variable i is used to indicate a device currently targeted for acquisition of setting data, another scheme (for example, a scheme in which a pointer indicating an address of an entry of a device currently targeted for acquisition of setting data is used) may be used to process devices in the device list sequentially.

As shown in Fig. 13, after the process of step S503 is finished, the PC 1A displays contents of the device list in the transmission confirmation dialog box 41. By execution of step S503, information of each device is displayed in the device list display field 43, and one of the statuses ("Identical", "Change", "Connection error") is also displayed in the device list display field 43 for each device.

Next, the PC 1A accepts inputs from buttons on the transmission confirmation dialog box 41 (S507). In this stage, the PC 1A allows the user to operate one of the "Search" button 45, "Refresh" button 47, "Remove" button 49, "Cancel" button 51, and "Send" button 53.

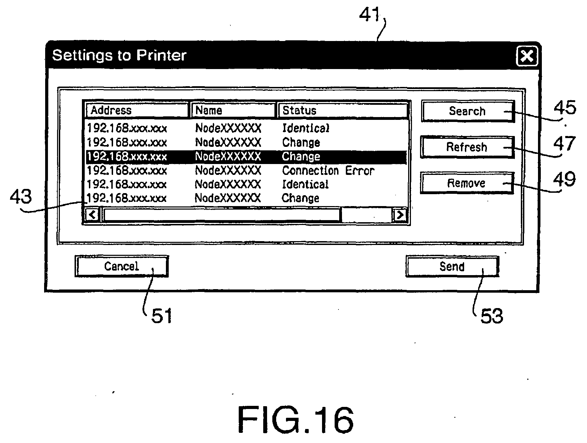

If the "Remove" button 49 is pressed (S509:YES), a designated device is removed from the device list (S511). The designation of a device to be removed from the device list is performed by selecting a device in the device list display field 43 and then pressing the "Remove" button 49. The "Remove" button 49 is grayed out in an initial condition as shown in Fig. 14, and the grayed out representation of the "Remove" button 49 is released when one of the devices is designated in the device list display field 43 (see Fig.16).

If the "Remove" button 49 is not pressed (S509:NO), control proceeds to step S513 where it is judged whether the "Refresh" button 47 is pressed. If the "Refresh" button 47 is pressed (S515:YES), control returns to step S503 to execute again the device setting acquisition process. Consequently, the information in the device list display field 43 is updated.

Next, in step S515, the PC 1A judges whether the "Search" button 45 is pressed or not. If the "Search" button 45 is pressed (S515:YES), control proceeds to step S.517. In step S517, the PC 1A searches for devices on the network to update the device list. More specifically, in step S517, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the data setting transmission process, updates the device list with regard to responding devices, and then refreshes information in the device list display field 43. After the process of step S517 is finished, control returns to step S503.

If undesired devices which are not to be targeted for the data setting transmission process according to the illustrative embodiment responded to the packet, the user may delete such undesirable devices using the "Remove" button 49.

If the "Search" button 45 is not pressed (S515:NO), control proceeds to step S519 where it is judged whether the "Send" button 53 is pressed. If the "Send" button 53 is pressed (S519:YES), the contents of the device list containing the statuses ("Identical", "Change", "Connection error") is recorded in a log file (S521), and the transmission confirmation dialog box 41 is wiped out (S523). Then, the transmission confirmation dialog process terminates.

If it is judged in step S519 that the "Send " button 53 is not pressed (S519:NO), control proceeds to step S527 where the PC 1A judges whether the "Cancel" button 51 is pressed. If the "Cancel" button 51 is pressed (S527:YES), the transmission confirmation dialog box 41 is wiped out (S523). Then, the transmission confirmation dialog process terminates.

As described above, step S523 is executed in both of the cases where the "Send " button 53 is pressed and where the "Cancel" button 51 is pressed, but the step S521 is executed only in the case where the "Send " button 53 is pressed. Pressing the "Send " button 53 instructs the PC 1A to continue the transmission confirmation dialog process, and pressing the "Cancel" button 51 instructs the PC 1A to stop the transmission confirmation dialog process. Information on whether the "Send" button 53 is pressed or the "Cancel" button 51 is pressed is used in step S107 of Fig. 7 as described later.

If it is judged in step S527 that the "Cancel" button 51 is not pressed (S527:NO), control proceeds to step S529. If it is judged in step S529 that no device in the device list display field 43 is double clicked (S529:NO), control returns to step S507 since no effective operation has been made by the user. If a device in the device list display field 43 is double clicked (S529:YES), the PC 1A executes an advanced setting change window process.

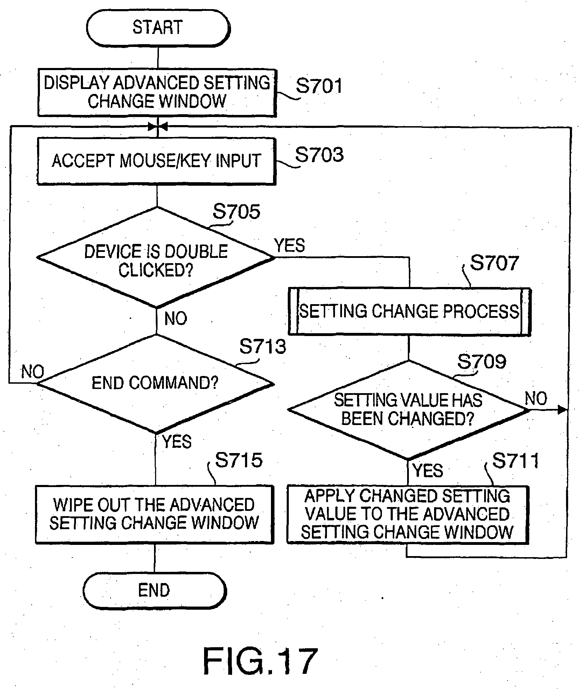

The advanced setting change window process is a process for making settings for each device on an individual basis. To a device which is not subjected to the advanced setting change window process, setting data identical to the representative device or setting data which is modified in the above mentioned process is transmitted. On the other hand, to a device which is subjected to the advanced setting change window process, setting data set in the advanced setting change window process is transmitted. Fig. 17 is a flowchart illustrating the advanced setting change window process.

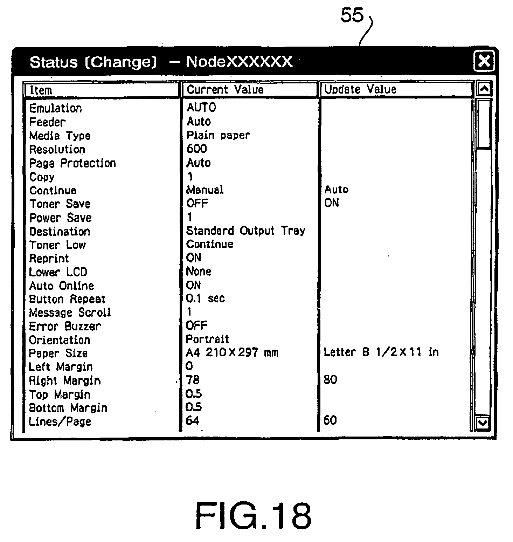

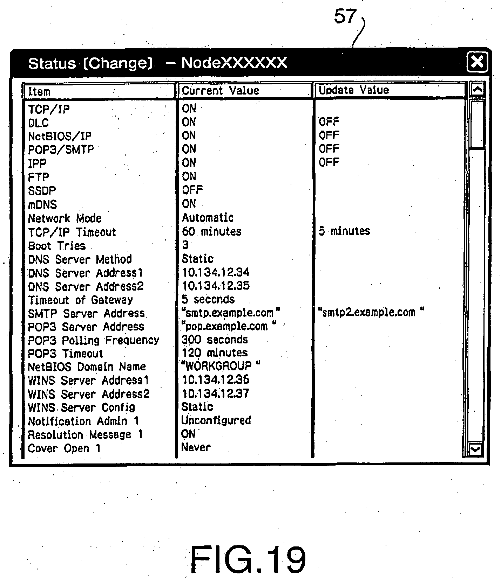

Firstly, the PC 1A displays an advanced setting change window (S701). The setting items are different between the first data setting transmission process for setting the principal function of a target device and the second data setting transmission process for setting NIC (network interface card) of the target device. Specifically, an advanced setting change window 55 as shown in Fig. 18 is displayed in the case of the first data setting transmission process, and an advanced setting change window 57 as shown in Fig. 19 is displayed in the case of the second data setting transmission process.

In each of the advanced setting change windows 55 and 57, various items for which setting values are to be transmitted to a device targeted for the advanced setting (a target device) are displayed in an "Item" box, setting values (current setting values) obtained from the target device are displayed in a "Current Value" box, and setting values to be updated are displayed in an "Update value" box. An item whose setting value in the "Update value" box is a blank represents that an "Update value" and a "Current value" of the item are identical to each other. If a device represented as a "Connection Error" in the device list display field 43 has been selected for the advanced setting change window process, all of fields in the "Current value" box and "Update value" box are represented as blanks. Although setting items are different between the advanced setting change window 55 and the advanced setting change window 57, these windows 55 and 57 are functionally equal to each other.

In step S703, the PC 1A accepts the input from the input device 105 (e.g. a mouse and keys). If one of items in the advanced setting change window 55 or the advanced setting change window 57 has been double clicked in step S703, the PC 1A judges that a setting value is changed (S705:YES). Then, the PC 1A executes a setting change process.

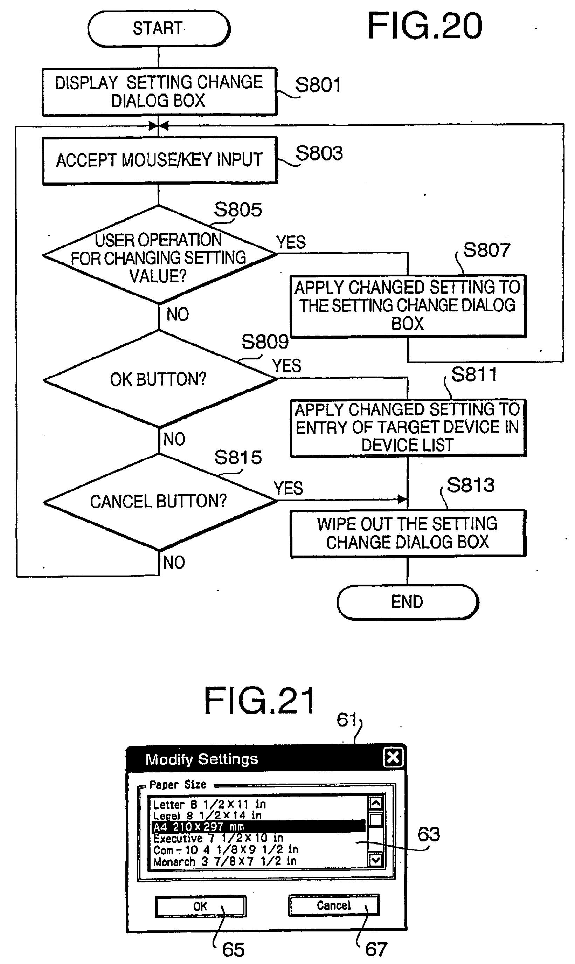

Fig. 20 is a flowchart illustrating the setting change process. Firstly, the PC 1A displays a setting change dialog box. Contents to be displayed in the setting change dialog box change depending on the type of an item double clicked in the advanced setting change window 55 or the advanced setting change window 57. Fig. 21 shows a setting change dialog box 61 which is displayed if the item "PaperSize" in the advanced setting change window 55 is double clicked.

As shown in Fig. 21, the setting change dialog box 61 includes a setting value selection box 63, an "OK" button 65 and a "Cancel" button 67. The setting value selection box 63, the "OK" button 65 and the "Cancel" button 67 are included in the setting change dialog box for all of the items in the advanced setting change windows 55 and 57.

After the setting change dialog box is displayed (S801), the PC 1A accepts the input from the input device 105 (e.g. a mouse and keys) in step S803. If one of setting values in the setting value selection box 63 is clicked, the PC 1A judges that a user operation for changing the setting value has been conducted (S805:YES). Then, the PC 1A applies the change of the setting value to the representation in the setting value selection box 63 (S807). Next, control returns to step S803.

If the user operation for changing the setting value has not been conducted (5805:NO), control proceeds to step S809. In step S809, it is judged whether the "OK" button 65 is pressed. If the "OK" button 65 is pressed (S809:YES), the changed setting value is applied to a corresponding entry (i.e. an entry corresponding to the device targeted for the advanced setting) in the device list (S811). Thus, the setting data designated in the setting change process is registered in the corresponding entry in the device list.

Since the setting data set by the advanced setting is unique to the device targeted for the advanced setting, the setting data set by the advanced setting is stored separately from changed setting data common to the other devices. After the step S811 is finished, the setting change dialog box 61 is wiped out (S813). Then, the setting change process terminates.

If it is judged in step S809 that the "OK" button 65 is not pressed (S809:NO), control proceeds to step S815. In step S815, it is judged whether the "Cancel" button 67 is pressed. If the "Cancel" button 67 is pressed (S815:YES), step S813 is processed and then the setting change process terminates. If the "Cancel" button 67 is not pressed (S815:NO), control returns to step S803 since no effective operation has been conducted.

Referring now to Fig. 17, after the setting change process shown in Fig. 20 (i.e. step S707) is finished, control proceeds to step S709. In step S709, it is judged whether setting values have been changed or not. Specifically, in step S709, the PC 1A judges whether the "OK" button 65 has been pressed or the "Cancel" button 67 has been pressed. If the setting values have been changed (S709:YES), changed setting values are applied to the advanced setting change windows 55 and 57 (S711). Then, control returns to step S703.

If the setting values have not been changed (S709:NO), control returns to step S703 without executing step S711.

If no device is double clicked in the advanced setting change windows 55 and 57 (i.e. setting values have not been changed) (S705:NO), control proceeds to step S713. In step S713, it is judged whether an end command (e.g. clicking an "x" button at the upper right position of a window, or pressing of "Alt" + "F4" keys) is inputted. If the end command is not inputted (S713:NO), control returns to step S703 since no effective operation is conducted. If the end command is inputted (S713:YES), the advanced setting change window 55 or 57 is wiped out (S715), and then the advanced setting change window process terminates.

As shown in Fig. 13, after the advanced setting change window process shown in Fig. 17 (i.e. step S531) is finished, control returns to step S507.

Referring now to Fig. 7, if the transmission confirmation dialog process of steps S501 to S531 is finished (i.e. step S105 is finished) by the operation of pressing the "Send" button 53 or the "Cancel" button 51, control proceeds to step S107 where the PC 1A judges whether the "Send" button 53 has been pressed. If the "Send" button 53 has not been pressed (S107:NO), control returns to step S101 to start again the data setting transmission process since in this case the "Cancel" button 51 has been pressed.

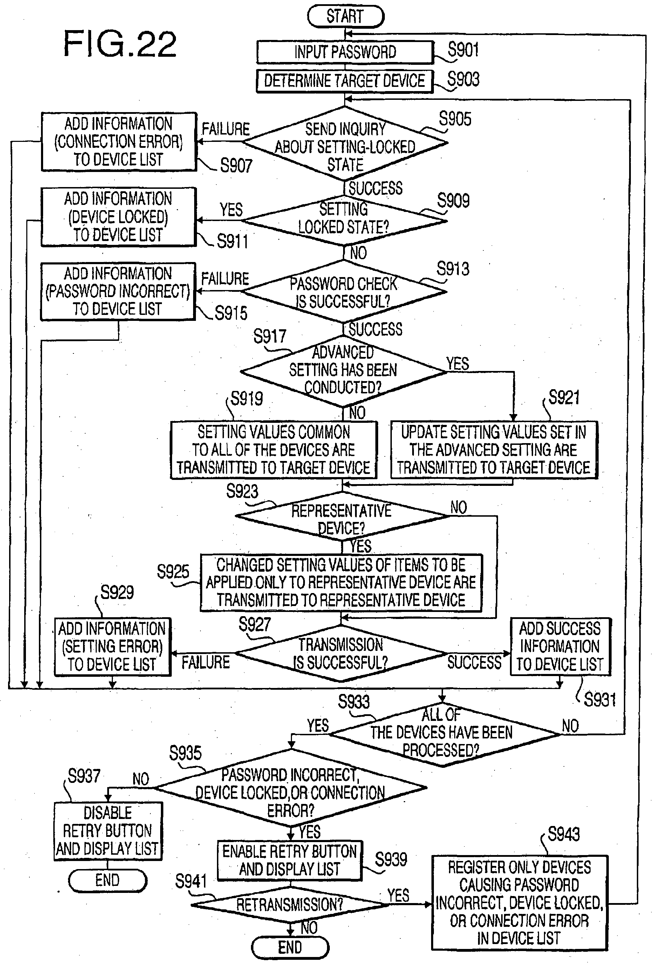

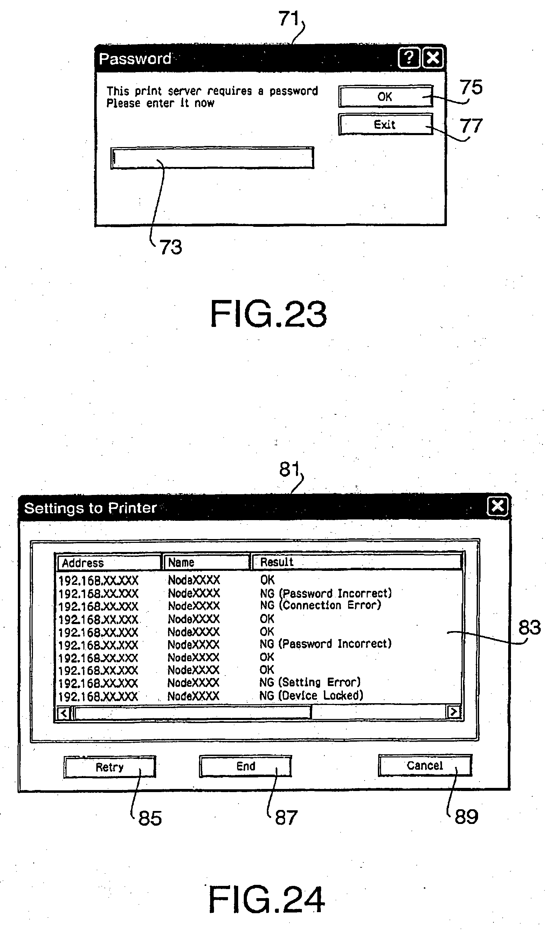

If the "Send" button 53 has been pressed (S107:YES), control proceeds to step S109 where a setting data package transmission process is executed. Fig. 22 is a flowchart illustrating the setting data package transmission process. Firstly, the PC 1A displays a password input dialog box 71 shown in Fig. 23 to accept the input of a password (S901). As shown in Fig. 23, the password input dialog box 71 includes a password input field 73, an "OK" button 75, and an "Exit" button 77. The password inputted by the user to the password input field 73 is used by each of the target devices in the device list for user authentication.

If the user inputs a password in the password input field 73 and presses the "OK" button 75, control proceeds to step S903. In step S903, the PC 1A determines a target device, to be processed in a loop process of steps of S905 to S933, from among the device list. In this illustrative embodiment, a variable *i* is used to indicate the target device currently targeted for the loop process of steps of S905 to S933. In step S903, the PC 1A initializes the variable i (i.e., the number 1 is assigned to the variable *i*).

Next, the PC1A sends an inquiry to the target device to check whether the target device is in a setting-locked state, which is a state in which a device inhibits a change of its settings through a network, or in a non-setting-locked state in which a device allows a change of its settings through a network (S905). If the target device receives the inquiry about the setting-locked state, the target device sends a response indicating whether the PC 1A is in the setting-locked state back to the PC 1A as a response to the inquiry. It should be noted that the device accepts a command, transmitted through the network, for switching between the setting-locked state and the non-setting-locked state. If the target device can not respond to the inquiry about the setting-locked state (e.g. power of the device is turned off, or a network cable is disconnected from the device), no reply is sent back to the PC 1A.

If the inquiry about the setting-locked state failed (S905:FAILURE), error information indicating an connection error (e.g. letters "Connection Error") is added to an area corresponding to the target device in the device list (S907). Then, control proceeds to step S933. If the inquiry about the setting-locked state is successful (S905:YES), control proceeds to step S909. In step S909, the PC 1A judges whether the target device is in the setting-locked state based on the response from the target device.

If it is judged in step S909 that the target device is in the setting-locked state (S909:YES), control proceeds to step S911 where data indicating that the target device is in the setting-locked state (e.g. letters "Device Locked") is added to an area corresponding to the target device in the device list. Then, control proceeds to step S933. If it is judged in step S909 that the target device is not in the setting-locked state (S909:NO), control proceeds to step S913.

In step S913, the PC 1A sends a packet containing the password entered by the user at step S901 to request the target device to perform user authentication, and thereafter judges whether the user authentication performed by the target device is successful based on a response to the packet sent by the target device. If the user authentication was unsuccessful (S913:FAILURE), data indicating that the user authentication was unsuccessful (e.g., letters "Password Incorrect") is added to an area corresponding to the target device in the device list (S915). If the user authentication is successful (S913:SUCCESS), control proceeds to step S917. In step S917, the PC 1A judges whether the advanced setting has been conducted.

If the advanced setting has not been conducted (S917:NO), control proceeds to step S919 where the setting values common to all of the devices in the device list are sent to the target device (the i-th device) by using setting values obtained from the representative device (i.e. the representative device selected on the user interface (UI) displayed before the initiation of the data setting transmission process) (S919). Specifically, in step S919, the data transmission is executed as follows. If the transmission type designated in the transmission type changing instruction field 25 is the "Send all Current Values", setting data identical to that of the representative device is transmitted to the target device. If the transmission type designated in the transmission type changing instruction field 25 is the "Send all Update Values", updated setting data which is updated with respect to current settings of the representative device is transmitted to the target device. If the transmission type designated in the transmission type changing instruction field 25 is the "Send Current and Update Values", setting data identical to that of the representative device with regard to items of which data is not updated with respect to the setting data of the representative device and the updated setting data which is updated with respect to current settings of the representative device are transmitted to the target device.

If the advanced setting has been conducted (S917:YES), update setting values set in the advanced setting change window process are transmitted to the target device (S921). The processes in steps S919 and S921 are executed in accordance with SNMP. That is, the PC 1A sends a data set request to the target device (the i-th device). The target device stores the setting values in the MIB (e.g. the MIB 311 in the case of the printer 3), which is managed by the target device, in accordance with the data set request transmitted from the PC 1A.

Next, the PC 1A judges whether the target device (being subjected to the setting data package transmission process) is the representative device (S923). If the target device is the representative device (S923:YES), changed setting values with regard to items to be applied only to the representative device are transmitted to the target device (S925). The items to be applied only to the representative device are determined in advance. For example, in the case of settings of the NIC (network interface card), the items to be applied only to the representative device are "Node Name" (a node name of the NIC), "Password" (an administrator password), service filter settings, "IP Address" (an IP address of the NIC), "Subnet Mask" (a subnet mask of the NIC), "Gateway" (gateway (router) address settings), "IP Config" (settings of a scheme of IP address acquisition), "Printer E-mail Address" (an E-mail address assigned to a printer/MFP), "POP3 account name" (an account name of a mail box used to access an E-mail sever), "POP3 account Password" (a password for the account of the mail box) because these items have to be set on a network interface card - on a network interface card basis.

After the process of step S925 is finished or it is judged in step S923 that the target device is not the representative device (S913:NO), control proceeds to step S927. In step S927, the PC 1A judges whether the transmission of setting data has been successfully finished or not. If the transmission of setting data has not been successfully finished (S927:FAILURE), data indicating that the transmission of setting data has not been successfully finished (e.g., letters "Setting Error") is added to an area corresponding to the target device in the device list (S929). Then, control proceeds to step S933.

If the transmission of setting data has been successfully finished (S927:SUCCESS), data indicating that the transmission of setting data has been successfully finished (e.g., letters "OK") is added to an area corresponding to the target device in the device list (S929). Then, control proceeds to step S933. When step S907, S911, S915, S929, or S931 is finished, control proceeds to step S933.

In step S933, the PC 1A judges whether all of the devices in the device list have been processed or not. Specifically, in step S933 the PC 1A increments the variable i by one and then judges whether a condition i≤n (where n represents the total number of devices in the device list) holds or not. If all of the devices in the device list have not been processed (S933:NO), control returns to step S905 to repeats the process from step S905 with regard to the device designated by the variable i incremented at step S933.

It is understood that by repeating the steps S905 to S933, all of the devices in the device list are processed. Although, in the above mentioned process from S905 to S933, the variable *i* which is counted up from 1 to *n* is used to indicate the target device, another scheme (for example, a scheme in which a pointer indicating an address of an entry of the target device is used) may be used to process devices in the device list sequentially.

If it is judged in step S933 that all of the devices in the device list have been successfully processed (S933:YES), control proceeds to step S935. In step S935, the PC 1A judges whether one of the error conditions of an authentication error ("Password Incorrect"), a setting-locked state ("Device Locked"), and a connection error ("Connection Error") is detected based on the device list. If the bad conditions are not detected at all (S935:NO), the PC 1A disables a "Retry" button 85 (see Fig. 24) and displays a result of the loop process of steps S901 to S933. If one of the error conditions is detected (S935:YES), the PC 1A enables the Retry button 85 and displays the result of the loop process of steps S901 to S933.

In steps S937 and S939, the PC 1A displays a transmission result dialog box 81 as the result of the loop process of steps S901 to 933 (see Fig. 24). As shown in Fig. 24, the transmission result dialog box 81 includes a transmission result display field 83, the "Retry" button 85, an "End" button 87 and a "Cancel" button 89. In step S937, the "Retry" button 85 is grayed out to indicate that the "Retry" button 85 is disabled, and therefore the operation on the "Retry" button 85 is disabled.

In the transmission result display field 83, a plurality of pieces of result data added in the device list in the steps S907, S911, S915, S929 and S931, respectively, are displayed so as to allow a user to know the error conditions.

As can be seen from Fig. 22, control proceeds from step S935 to S937 if all of the authentication error, the setting-locked state and the connection error are not detected. Therefore, step S937 is processed in the case where the transmission of setting data in step S927 is unsuccessful and the case where the transmission of setting data is successfully completed. Of course, if the transmission of setting data is successfully completed, retransmission of setting data is not necessary.

If the transmission of setting data is unsuccessful because the setting data is wrong, it is inappropriate to retransmit the setting data (wrong setting data). Therefore, in such a case, it is necessary to correct the wrong setting data without executing the retransmission of setting data.

If the transmission of setting data in step S925 is unsuccessful due to the failure of the target device, there is no use in retransmitting the setting data to the target device.

For this reason, in step S937, the "Retry" button 85 is disabled so that unnecessary retransmission of setting data is not executed. If the user presses the "End" button 87 in step S937, the setting data package transmission process of Fig. 22 terminates.

On the other hand, if at least one of the error conditions of the authentication error, the setting-locked state and the connection error is detected, there is a possibility that the transmission of setting data becomes successful by reentering a correct password, releasing the setting-locked state, or removing conditions of the connection error (e.g. turning on the power of the target device, checking the connection of the network cable, etc.). Therefore, in this case (i.e., in step S939), the PC 1A enables the operation on the "Retry" button 85 to allow the user to start the retransmission of setting data.

If the user operates buttons on the transmission result dialog box 81, control proceeds to step S941. In step S941, the PC 1A judges whether the user instructs the PC 1A to start the retransmission of setting data. If the "Retry" button 85 is not pressed (S941:NO), the setting data package transmission process of Fig. 22 terminates. If the "Retry" button 85 is pressed (S941:YES), control proceeds to step S943. In step S943, the PC 1A modifies the device list so that only devices, each of which has one of the error conditions of the authentication error, the setting-locked state and the connection error, are registered in the device list and are displayed in the transmission result display field 83. Then, control returns to step S901 to repeat the loop process of steps S901 to S933 with regard to the devices stored in the modified device list.

Since the information of the modified device list is displayed in step S939 before the retry process from step S901 is executed, the user is able to know which device is targeted for the retry process before the execution of the retry process. Therefore, the use is able to resolve the problems of the error conditions, for example, by reentering a correct password to resolve the authentication error, switching the setting-locked state to the non-setting-locked state, or removing a condition of the connection error (e.g., turning on power of a device or checking the connection of the network cable for a device). Consequently, the user is able to successfully execute the retransmission of setting data.

If the retransmission of setting data has been successfully finished, control proceeds from step S935 to S937. The setting data package transmission process terminates if the user pressed the "End" button 87 in step S937.

Referring now to Fig. 7, after the process of step S109 (i.e. the setting data package transmission process shown in Fig. 22) is finished, the data setting transmission process shown in Fig. 7 terminates.

As described above, if the "Send" button 17 in the "General" tab of the NIC setting dialog box 15 is pressed, the PC 1 A operates to execute the second data setting transmission process to transmit the setting data. Meanwhile, as shown in Fig. 6, input fields for various types of items are provided in the NIC setting dialog box 15 so as to accept user operations for inputting setting data. If the user operation is conducted on the NIC setting dialog box 15, there is a possibility that setting values different from the setting values transmitted by the second data setting transmission process are inputted to the NIC setting dialog box 15.

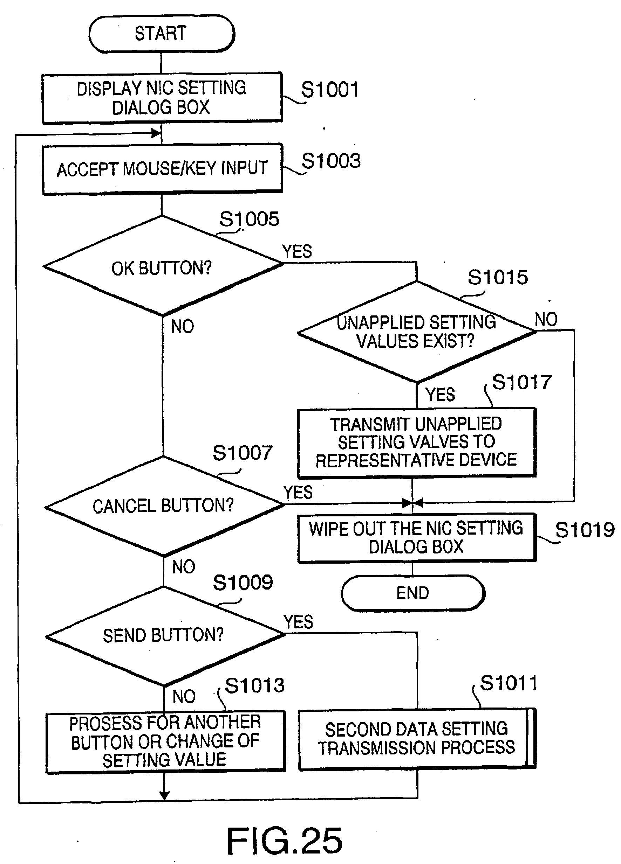

For this reason, an NIC setting dialog displaying process is executed as follows. Fig. 25 is a flowchart illustrating the NIC setting dialog displaying process. Firstly, the PC 1A displays the NIC setting dialog box (S1001). Then, in step S1003, the PC 1A accepts the inputs from the input device (e.g. a mouse and keys). Next, the PC 1 A judges whether the "OK" button is pressed in step S1005, judges whether the "Cancel" button is pressed in step S1007, and judges whether the "Send" button is pressed in step S1009.

If it is judged in step S1009 that the "Send" button is pressed (S1005:NO, S1007:NO, S1009:YES), the second data setting transmission process described above is executed (S1011). Then, control returns to step S1003.

If it is judged in step S1009 that the "Send" button is not pressed (S1005:NO, S1007:NO, S1009:NO), another process for treating user operations for changing settings is executed (S1013). Then, control returns to step S1003.

Since the NIC setting dialog displaying process includes step S1013, there is a possibility that a user has inputted setting values on the NIC setting dialog box when it is judged in step S1005 that the "OK" button is pressed. If the user has inputted setting values on the NIC setting dialog box, it is necessary to transmit the setting values inputted by the user on the NIC setting dialog box to the representative device independent of the process of step S1011.

For this reason, if it is judged in step S1005 that the "OK" button is pressed (S1005:YES), the PC 1A judges whether unapplied setting values exist in the input fields of the NIC setting dialog box (S1015). If the unapplied setting values exist (S1015:YES), the PC 1A transmits the unapplied setting values to the representative device (S1017). Next, the PC 1A wipes out the NIC setting dialog box 15 (S1019). Then, the NIC setting dialog displaying process terminates.

If it is judged in step S1007 that the "Cancel" button is pressed (S1007:YES), the PC 1A wipes out the NIC setting dialog box 15 (S1019). Then, the NIC setting dialog displaying process terminates.

As described above, according to the data setting transmission process of the embodiment, setting data identical to that of the representative device and/or changed setting data (updated with respect to settings of the representative device) are transmitted to a plurality of devices concurrently (in the setting data package transmission process).

In addition, if a transmission error is caused with regard to a device in the setting data package transmission process, the transmission result dialog box 81 is displayed to allow the user to know the error conditions of the device. If the condition of the transmission error is one of the authentication error, the setting-locked state and the connection error, the user is able to easily start the retransmission of setting data by simply pressing the "Retry" button 85. Since devices which need the retransmission of setting data are automatically selected and displayed by the PC 1A, it is unnecessary for the user to memorize (or make a memo of) such devices. It is also unnecessary for the user to select devices to be subjected to the retransmission of setting data.

Accordingly, the retransmission of setting data is securely executed only for devices which need the retransmission of setting data. The setting data is not retransmitted to devices that need the retransmission of setting data and the setting data is retransmitted to devices that do not need the retransmission of setting data.

If it is judged in one of steps of S905, S909, S913, S927 and S935 that the transmission error is caused by a condition which the user is able to solve, the retransmission of setting data is started from step S901 without requiring the user to reenter the setting data to the PC 1A.

Judgment results of steps S905, S909, S913 and S927, which are provided for each of the target devices, are displayed in a list in step S939. Therefore, the user is able to know which device successfully received the setting data and which device did not receive the setting data.

If the PC 1A receives instructions to start the retransmission of setting data from the user in step S941, the PC 1A modifies the device list to remove devices to which the setting data is successfully transmitted from the device list, and thereafter displays the modified device list. Therefore, the user is able to know which device is subjected to the retransmission of setting data before the retransmission is started:

The device list is modified so as to remove devices, to which the setting data is successfully transmitted, from the device list, and the modified device list is displayed. Therefore, the user does not mistake the device to which the setting data is successfully transmitted for the device which is involved in the transmission error. By contrast, if all of the devices are displayed including devices to which the setting data is successfully transmitted and devices involved in the transmission errors, there is a possibility that the user mistakes the device to which the setting data is successfully transmitted for the device which is involved in the transmission error.

Although the present invention has been described in considerable detail with reference to certain illustrative embodiments thereof, other embodiments are possible.

In the above mentioned illustrative embodiment, if it is not necessary to transmit setting values to the representative device, a user is required to use the "Remove" button to remove the representative device from targets for the data setting transmission process because in the above mentioned illustrative embodiment the representative device is typically included in the targets for the data setting transmission process.

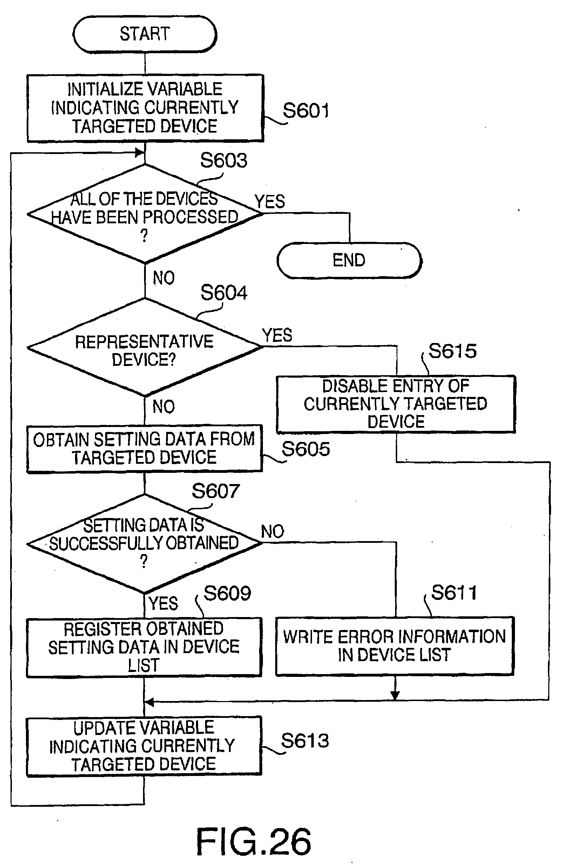

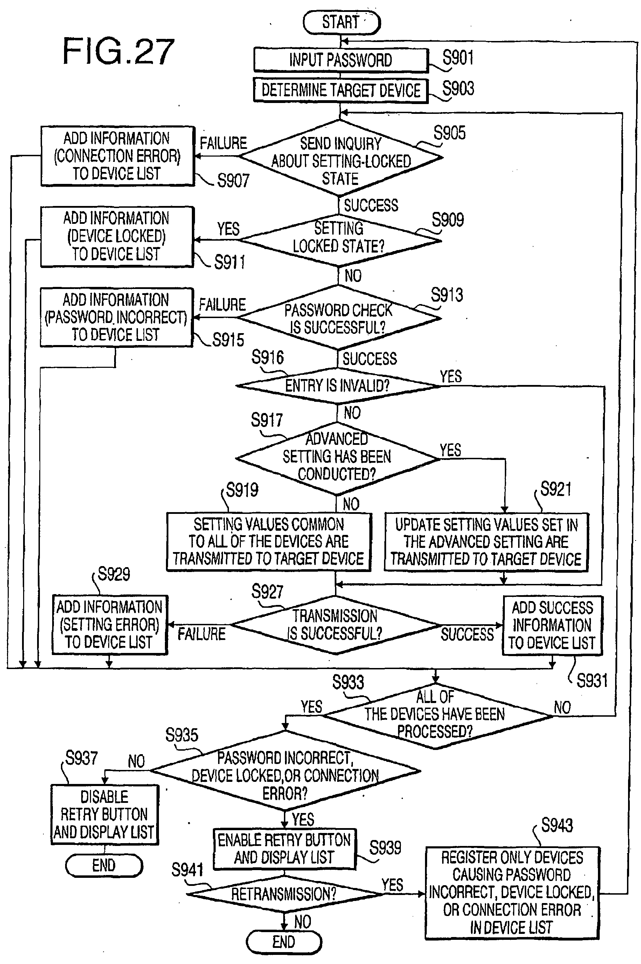

However, the data setting transmission process may be configured such that the representative device is excluded in advance from the targets for the data setting transmission process. Such a configuration for excluding the current device from the targets for the data setting transmission process is attained by a configuration shown in Figs. 26 and 27. Fig. 26 is a variation of the device setting acquisition process shown in Fig. 15. Fig. 27 is a variation of the setting data package transmission process of Fig. 22. In the variation shown in Fig. 26, steps S604 and S615 are added to the device setting acquisition process of Fig. 15.

In the process shown in Fig. 26, if it is judged that all of the devices have not been processed (S603:NO), the PC 1A judges whether the target device (the i-th device) is the representative device (S604). If it is judged in step S604 that the target device is the representative device (S604:YES), control proceeds to step S615. In step S615, the PC 1A disables an entry corresponding to the representative device in the device list so that steps S605 to S611 are not executed for the representative device. That is, the entry of the representative device is designated as an invalid entry. After the step S615 is finished, control proceeds to step S613. If it is judged in step S604 that the target device is not the representative device (S604:NO), control proceeds to step S605.

In the variation shown in Fig. 27, step S916 is added to the process of Fig. 22 and steps S923 and S925 are omitted from the process of Fig. 22. According to the variation shown in Fig. 27, before the setting data common to the target devices or setting data prepared by the advanced setting is transmitted in steps S917 to S921, the PC 1A judges whether an entry corresponding to the target device in the device list is invalid or not (S916). If it is judged in step S916 that the entry is invalid (S916:YES), control proceeds to step S927 without executing the steps S917 to S921.

Consequently, acquisition of setting data from the target device, and transmission of setting data common to the target devices or setting data set by the advanced setting are skipped for the representative device.

Although in the above mentioned illustrative embodiment the data setting transmission process is targeted for printing devices such as a printer, the embodiment can be also applied to various types of devices, for example, a scanner, an image obtaining device (such as a network camera), an image communication device (such as a facsimile device), a communication routing device (such as a network point), and an information server device (such as a network storage), which are typically used in such a situation that setting values are substantially common to a plurality of devices.

In the above mentioned illustrative embodiment only the PC 1A contributes to the data setting transmission process. That is, only the PC 1A functions as a setting data transmitting device. However, the setting data transmission function may be distributed over a plurality of nodes. If such a distributed system is configured such that output data of a functional block implemented in one node is used as input data to be inputted to a functional block implemented in another node, the distributed system is implemented as a network system that also functions similarly to the data transmission device. For example, such a distributed system on a network may be implemented by use of a plurality of PCs 1A, 1B and 1C.

Although in the above mentioned embodiment the setting data to be transmitted to the target devices in the device list are prepared by obtaining the current setting data currently set to the representative device, such setting data to be transmitted to the target devices may be inputted manually by a user. Alternatively or additionally, samples of setting data to be transmitted to the target devices may be prepared in advance in PC 1A (1B or 1C), and one of the samples may be selected as the setting data to be transmitted to the target devices.

Alternatively, a management server having the function of obtaining current setting data currently set to the target devices in the device list from the target devices through the network may be connected to the network. In this case, the current setting data of the target devices is obtained from the management server without directly accessing the target devices.

In the setting data package transmission process of Fig. 22, the password input process of step S901 is executed for each of target devices in the device list. However, the password input process of step S901 may be omitted if user authentication is not required by all of the devices in the device list.

If the greater part of the target devices in the device list is devices which do not require user authentication and only a small part of the target devices in the device list requires user authentication, step S901 may be skipped in the first process in the repetition of steps S901 to S933 so that step S901 is executed from the second process in the repetition of steps S901 to S933.

If the greater part of the target devices in the device list is devices which require a default password and only a small part of the target devices requires an individual password, step S901 may be skipped and the default password may be used in step S913 in the first process in the repetition of steps S901 to S933, and step S901 may be executed and the password entered in step S901 may be used in step S913 from the second process in the repetition of steps S901 to S933.

## Claims

1. A method of transmitting setting data from a terminal device (1 A) to a plurality of target devices (3), comprising the steps of:
preparing new setting data for the plurality of target devices (3);
transmitting the new setting data to each of the plurality of target devices (3);
obtaining a result of the step of transmitting including error conditions of respective target devices (3) which did not successfully receive the new setting data in the step of transmitting;
classifying the error conditions into one of a first group type having a property that a user can solve the error condition and a second group type having a property that the user can not solve the error condition;
judging whether retransmission of the new setting data is needed for each of the plurality of target devices (3) based on a result of the step of transmitting, wherein a target device (3) having the error condition of the first group type is judged to need retransmission; and
retransmitting the new setting data to at least one target device (3) which is judged to need retransmission.

2. The method according to claim 1, further comprising the steps of:
displaying (106) the result of the step of transmitting before the step of retransmitting; and
giving the user the opportunity to decide whether to initiate the step of retransmitting.

3. The method according to claim 1, wherein the step of transmitting comprises the steps of:
inquiring to each of the plurality of target devices (3) to check whether each of the plurality of target devices (3) is capable of carrying out data communications; and
obtaining a result of the step of inquiring,
wherein the result of the step of inquiring is used for the step of judging.

4. The method according to claim 1, wherein the step of transmitting comprises the steps of:
requesting the plurality of target devices (3) to perform authentication; and
obtaining a result of the authentication from the plurality of the target devices (3), wherein the result of the authentication is used for the step of judging.

5. The method according to claim 1, wherein the step of transmitting comprises the steps of:
inquiring to one of the plurality of target devices (3) to check whether the one of the plurality of target devices (3) is in a setting-locked state; and
receiving a result of the inquiring, wherein the result of the inquiring is used for the step of judging.

6. The method according to claim 1,
wherein the judging step comprises the steps of:
judging whether, for each of the plurality of target devices (3), the transmission is successfully finished; and
storing a result of the step of judging the transmission is successfully finished in a memory (303) in the terminal device (3),
wherein the retransmitting step comprises the steps of:
specifying a target device (3) which failed in the transmission based on the result of the step of judging the transmission is successfully finished; and
retransmitting the new setting data to the specified target device (3).

7. The method according to claim 1, further comprising the steps of:
judging whether, for each of the plurality of target devices (3), the transmission is successfully finished;
displaying a list containing a result of the step of judging the transmission is successfully finished;
deleting a target device (3) which succeeded in the transmission from the list if a retransmission command is inputted by a user; and
displaying again the list.

8. The method according to claim 1, wherein the step of retransmitting comprises the step of requesting the plurality of target devices (3) to perform authentication before retransmitting the new setting data.

9. The method according to claim 8, wherein the step of requesting the authentication comprises the step of displaying (106) a password input screen for requesting a user to input a password for the authentication.

10. The method according to claim 1, wherein the step of retransmitting is executed by removing a target device (3) which succeeded in the transmitting from the plurality of target devices (3) and performing again the transmitting step and the judging step.

11. The method according to claim 1, comprising the steps of:
preparing a plurality of pieces of new setting data for the plurality of target devices (3), respectively;
transmitting the plurality of pieces of new setting data to the plurality of target devices (3), respectively;
judging whether retransmission of the plurality of pieces of new setting data is needed for each of the plurality of target devices (3) based on a result of the step of transmitting; and
retransmitting one of the plurality of pieces of new setting data to at least one target device (3) which is judged to need retransmission.

12. A computer program for use on a computer, the computer program being arranged to carry out the method of transmitting setting data of any one of claims 1 to 10 when said computer program is run on a computer.

13. A terminal device (1 A) for transmitting setting data to a plurality of target devices (3), comprising:
a transmitting system (108) configured to transmit new setting data to each of the plurality of target devices (3), to obtain a result of the transmission including error conditions of respective target devices (3) which did not successfully receive the new setting data in the transmission and to classify the error conditions into one of a first group type having a property that a user can solve the error condition and a second group type having a property that the user can not solve the error condition;
a judging system (101) configured to judge whether retransmission of the new setting data is needed for each of the plurality of target devices (3) based on a result of the transmitting by the transmitting system (108), wherein a target device (3) having the error condition of the first group type is judged to need retransmission; and
a retransmitting system (108) configured to retransmit the new setting data to at least one target device (3) which is judged to need retransmission.

14. The terminal device according to claim 13, further comprising a selecting system (101, 105, 106) that allows a user to select the plurality of target devices (3) from among a plurality of target devices (3).

15. A system for transmitting setting data to a plurality of target devices (3), comprising:
a transmitting system (108) configured to transmit new setting data to each of the plurality of target devices (3), to obtain a result of the transmission including error conditions of respective target devices (3) which did not successfully receive the new setting data in the transmission and to classify the error conditions into one of a first group type having a property that a user can solve the error condition and a second group type having a property that the user can not solve the error condition;
a judging system (101) configured to judge whether retransmission of the new setting data is needed for each of the plurality of target devices (3) based on a result of the transmitting by the transmitting system (108), wherein a target device (3) having the error condition of the first group type is judged to need retransmission; and
a retransmitting system (108) configured to retransmit the new setting data to at least one target device (3) which is judged to need retransmission.

16. The system according to claim 19, further comprising a selecting system (101, 105, 106) that allows a user to select the plurality of target devices (3) from among a plurality of target devices (3) connected to the network.

## Patentansprüche

1. Verfahren zum Senden von Einstellungsdaten von einer Endgerätevorrichtung (1A) zu vielen Zielvorrichtungen (3), mit den folgenden Schritten:
Vorbereiten von neuen Einstellungsdaten für die vielen Zielvorrichtungen (3);
Senden der neuen Einstellungsdaten zu jeder der vielen Zielvorrichtungen (3);
Erhalten eines Ergebnisses des Sendeschritts einschließlich von Fehlerzuständen von jeweiligen Zielvorrichtungen (3), die die neuen Einstellungsdaten bei dem Sendeschritt nicht erfolgreich erhalten haben;
Klassifizieren der Fehlerzustände entweder in eine erste Gruppenart, die eine Eigenschaft hat, dass ein Benutzer den Fehlerzustand lösen kann, oder einer zweiten Gruppenart, die eine Eigenschaft hat, dass der Benutzer den Fehlerzustand nicht lösen kann;
Bestimmen, ob ein erneutes Senden der neuen Einstellungsdaten für jede der vielen Zielvorrichtungen (3) auf der Grundlage eines Ergebnisses des Sendeschritts erforderlich ist, wobei bestimmt wird, dass für eine Zielvorrichtung (3) nicht erneut gesendet werden muss, die den Fehlerzustand der ersten Gruppenart hat; und
erneutes Senden der neuen Einstellungsdaten zumindest zu einer Zielvorrichtung (3), von der bestimmt wird, dass sie ein erneutes Senden benötigt.

2. Verfahren gemäß Anspruch 1, des Weiteren mit den folgenden Schritten:
Anzeigen (106) des Ergebnisses des Sendeschritts vor dem Schritt zum erneuten Senden; und
Bereitstellen der Gelegenheit, dass der Benutzer bestimmt, ob der Schritt zum erneuten Senden begonnen wird.

3. Verfahren gemäß Anspruch 1, wobei der Sendeschritt die folgenden Schritte aufweist:
Anfragen an jede der vielen Zielvorrichtungen (3), um zu überprüfen, ob jede der vielen Zielvorrichtungen (3) Datenkommunikationen durchführen kann; und
Erhalten eines Ergebnisses des Anfrageschritts,
wobei das Ergebnis des Anfrageschritts für den Bestimmungsschritt verwendet wird.

4. Verfahren gemäß Anspruch 1, wobei der Sendeschritt die folgenden Schritte aufweist:
Auffordern der vielen Zielvorrichtungen (3), eine Authentifizierung durchzuführen; und
Erhalten eines Ergebnisses der Aufforderung von den vielen Zielvorrichtungen (3), wobei das Ergebnis der Authentifizierung für den Bestimmungsschritt verwendet wird.

5. Verfahren gemäß Anspruch 1, wobei der Sendeschritt die folgenden Schritte aufweist:
Anfragen an eine der vielen Zielvorrichtungen (3), um zu überprüfen, ob die eine der vielen Zielvorrichtungen (3) in einem Zustand von blockierten Einstellungen ist; und
Aufnehmen eines Ergebnisses der Anfrage, wobei das Ergebnis der Anfrage für den Bestimmungsschritt verwendet wird.

6. Verfahren gemäß Anspruch 1,
wobei der Bestimmungsschritt die folgenden Schritte aufweist:
Bestimmen, ob für jede der vielen Zielvorrichtungen (3) das Senden erfolgreich beendet wurde; und
Speichern eines Ergebnisses des Bestimmungsschritts, dass das Senden erfolgreich beendet wurde, in einen Speicher (303) in der Endgerätevorrichtung (3),
wobei der Schritt zum erneuten Senden die folgenden Schritte aufweist:
Spezifizieren einer Zielvorrichtung (3), die bei dem Senden fehlerhaft ist, auf der Grundlage des Ergebnisses des Bestimmungsschritts, dass das Senden erfolgreich beendet wurde; und
erneutes Senden der neuen Einstellungsdaten zu der spezifischen Zielvorrichtung (3).

7. Verfahren gemäß Anspruch 1, des Weiteren mit den folgenden Schritten:
Bestimmen, ob für jede der vielen Zielvorrichtungen (3) das Senden erfolgreich beendet wurde;
Anzeigen einer Liste, die ein Ergebnis des Bestimmungsschritts enthält, dass das Senden erfolgreich beendet wurde;
Löschen einer Zielvorrichtung (3), deren Senden erfolgreich war, von der Liste, falls ein Befehl zum erneuten Senden durch einen Benutzer eingegeben wird; und
erneutes Anzeigen der Liste.

8. Verfahren gemäß Anspruch 1, wobei der Schritt zum erneuten Senden den Aufforderungsschritt der vielen Zielvorrichtungen (3) zum Durchführen einer Authentifizierung vor dem erneuten Senden der neuen Einstellungsdaten aufweist.

9. Verfahren gemäß Anspruch 8, wobei der Aufforderungsschritt der Authentifizierung den Anzeigeschritt (106) eines Passworteingabeschirms aufweist, um einen Benutzer aufzufordern, ein Passwort für die Authentifizierung einzugeben.

10. Verfahren gemäß Anspruch 1, wobei der Schritt zum erneuten Senden ausgeführt wird, indem eine Zielvorrichtung (3), die beim Senden erfolgreich war, von den vielen Zielvorrichtungen (3) beseitigt wird und indem der Sendeschritt und der Bestimmungsschritt erneut durchgeführt werden.

11. Verfahren gemäß Anspruch 1, mit den folgenden Schritten:
Vorbereiten von vielen neuen Einstellungsdatenstücken für die vielen entsprechenden Zielvorrichtungen (3);
Senden der vielen neuen Einstellungsdatenstücke zu den vielen entsprechenden Zielvorrichtungen (3);
Bestimmen auf der Grundlage eines Ergebnisses des Sendeschritts, ob ein erneutes Senden der vielen neuen Einstellungsdatenstücke für jede der vielen Zielvorrichtungen (3) erforderlich ist; und
erneutes Senden von einem der vielen neuen Einstellungsdatenstücke zu zumindest einer Zielvorrichtung (3), von der bestimmt wird, dass ein erneutes Senden erforderlich ist.

12. Computerprogramm zum Gebrauch bei einem Computer, wobei das Computerprogramm dazu eingerichtet ist, das Verfahren zum Senden von Einstellungsdaten gemäß einem der Ansprüche 1 bis 10 durchzuführen, wenn das Computerprogramm auf einem Computer läuft.

13. Endgerätevorrichtung (1A) zum Senden von Einstellungsdaten zu vielen Zielvorrichtungen (3), mit:
einem Sendesystem (108), das dazu konfiguriert ist, neue Einstellungsdaten zu jeder der vielen Zielvorrichtungen (3) zu senden, ein Ergebnis des Sendens einschließlich von Fehlerzuständen der jeweiligen Zielvorrichtungen (3) zu erhalten, die die neuen Einstellungsdaten bei dem Senden nicht erfolgreich aufgenommen haben, und die Fehlerzustände entweder in eine erste Gruppenart, die eine Eigenschaft hat, dass ein Benutzer den Fehlerzustand lösen kann, und eine zweite Gruppenart zu klassifizieren, die eine Eigenschaft hat, dass der Benutzer den Fehlerzustand nicht lösen kann;
einem Bestimmungssystem (101), das dazu konfiguriert ist, auf der Grundlage eines Ergebnisses des Sendens durch das Sendesystem (108) zu bestimmen, ob ein erneutes Senden der neuen Einstellungsdaten für jede der vielen Zielvorrichtungen (3) erforderlich ist, wobei bestimmt wird, dass ein erneutes Senden für eine Zielvorrichtung (3) erforderlich ist, die den Fehlerzustand der ersten Gruppenart hat; und
einem System (108) zum erneuten Senden, das dazu konfiguriert ist, die neuen Einstellungsdaten zumindest zu einer Zielvorrichtung (3) erneut zu senden, bei der bestimmt wird, dass ein erneutes Senden erforderlich ist.

14. Endgerätevorrichtung gemäß Anspruch 13, des Weiteren mit einem Auswahlsystem (101, 105, 106), das einem Benutzer ermöglicht, die vielen Zielvorrichtungen (3) aus einer Mehrzahl an Zielvorrichtungen (3) auszuwählen.

15. System zum Senden von Einstellungsdaten zu vielen Zielvorrichtungen (3), mit:
einem Sendesystem (108), das dazu konfiguriert ist, neue Einstellungsdaten zu jeder der vielen Zielvorrichtungen (3) zu senden, ein Ergebnis des Sendens einschließlich von Fehlerzuständen der jeweiligen Zielvorrichtungen (3) zu erhalten, die die neuen Einstellungsdaten bei dem Senden nicht erfolgreich aufgenommen haben, und die Fehlerzustände entweder in eine erste Gruppenart, die eine Eigenschaft hat, dass ein Benutzer den Fehlerzustand lösen kann, und eine zweite Gruppenart zu klassifizieren, die eine Eigenschaft hat, dass der Benutzer den Fehlerzustand nicht lösen kann;
einem Bestimmungssystem (101), das dazu konfiguriert ist, auf der Grundlage eines Ergebnisses des Sendens durch das Sendesystem (108) zu bestimmen, ob ein erneutes Senden der neuen Einstellungsdaten für jede der vielen Zielvorrichtungen (3) erforderlich ist, wobei bestimmt wird, dass das erneute Senden für eine Zielvorrichtung (3) erforderlich ist, die den Fehlerzustand der ersten Gruppenart hat; und
einem System (108) zum erneuten Senden, das dazu konfiguriert ist, die neuen Einstellungsdaten zumindest zu einer Zielvorrichtung (3) erneut zu senden, bei der bestimmt wird, dass ein erneutes Senden erforderlich ist.

16. System gemäß Anspruch 19, des Weiteren mit einem Auswahlsystem (101, 105, 106), das einem Benutzer ermöglicht, die vielen Zielvorrichtungen (3) aus einer Vielzahl an Zielvorrichtungen (3) auszuwählen, die mit dem Netzwerk verbunden sind.

## Revendications

1. Procédé de transmission de données de réglage à partir d'un dispositif terminal (1A) à une pluralité de dispositifs cibles (3), comprenant les étapes qui consistent :
à préparer des nouvelles données de réglage pour la pluralité de dispositifs cibles (3) ;
à transmettre les nouvelles données de réglage à chacun de la pluralité de dispositifs cibles (3) ;
à obtenir un résultat de l'étape de transmission comportant des conditions d'erreur de dispositifs cibles respectifs (3) qui n'ont pas reçu avec succès les nouvelles données de réglage dans l'étape de transmission ;
à classer les conditions d'erreur dans un type de groupe parmi un premier type de groupe ayant une propriété selon laquelle un utilisateur peut résoudre la condition d'erreur et un deuxième type de groupe ayant une propriété selon laquelle l'utilisateur ne peut pas résoudre la condition d'erreur ;
à déterminer si une retransmission des nouvelles données de réglage est nécessaire pour chacun de la pluralité de dispositifs cibles (3) sur la base d'un résultat de l'étape de transmission, où un dispositif cible (3) ayant la condition d'erreur du premier type de groupe est déterminé comme ayant besoin d'une retransmission ;
à retransmettre les nouvelles données de réglage à au moins un dispositif cible (3) qui est déterminé comme ayant besoin d'une retransmission.

2. Procédé selon la revendication 1, comprenant en outre les étapes qui consistent :
à afficher (106) le résultat de l'étape de transmission avant l'étape de retransmission ; et
à donner à l'utilisateur l'opportunité de décider s'il faut initier l'étape de retransmission.

3. Procédé selon la revendication 1, dans lequel l'étape de transmission comprend les étapes qui consistent
à demander à chacun de la pluralité de dispositifs cibles (3) de vérifier si chacun de la pluralité de dispositifs cibles (3) est capable de réaliser des communications de données ; et
à obtenir un résultat de l'étape de demande,
où le résultat de l'étape de demande est utilisé pour l'étape de détermination.

4. Procédé selon la revendication 1, dans lequel l'étape de transmission comprend les étapes qui consistent :
à demander à la pluralité de dispositifs cibles (3) d'effectuer une authentification ; et
à obtenir un résultat de l'authentification à partir de la pluralité des dispositifs cibles (3), où le résultat de l'authentification est utilisé pour l'étape de détermination.

5. Procédé selon la revendication 1, dans lequel l'étape de transmission comprend les étapes qui consistent :
à demander à l'un de la pluralité de dispositifs cibles (3) de vérifier si l'un de la pluralité de dispositifs cibles (3) est dans un état de réglage verrouillé ; et
à recevoir un résultat de la demande, où le résultat de la demande est utilisé pour l'étape de détermination.

6. Procédé selon la revendication 1,
dans lequel l'étape de détermination comprend les étapes qui consistent :
à déterminer si, pour chacun de la pluralité de dispositifs cibles (3), la transmission se termine avec succès ; et
à stocker un résultat de l'étape de détermination du fait que la transmission se termine avec succès dans une mémoire (303) dans le dispositif terminal (3),
dans lequel l'étape de retransmission comprend les étapes qui consistent :
à spécifier un dispositif cible (3) qui a échoué dans la transmission sur la base du résultat de l'étape de détermination du fait que la transmission se termine avec succès ; et
à retransmettre les nouvelles données de réglage au dispositif cible spécifié (3).

7. Procédé selon la revendication 1, comprenant en outre les étapes qui consistent :
à déterminer si, pour chacun de la pluralité de dispositifs cibles (3), la transmission se termine avec succès ;
à afficher une liste contenant un résultat de l'étape de détermination du fait que la transmission se termine avec succès ;
à supprimer un dispositif cible (3), qui a effectué avec succès la transmission, de la liste si une commande de retransmission est saisie par un utilisateur ; et
à afficher à nouveau la liste.

8. Procédé selon la revendication 1, dans lequel l'étape de retransmission comprend l'étape qui consiste à demander à la pluralité de dispositifs cibles (3) d'effectuer une authentification avant la retransmission des nouvelles données de réglage.

9. Procédé selon la revendication 8, dans lequel l'étape de demande de l'authentification comprend l'étape consistant à afficher (106) un écran de saisie de mot de passe pour demander à un utilisateur de saisir un mot de passe pour l'authentification.

10. Procédé selon la revendication 1, dans lequel l'étape de retransmission est exécutée en éliminant un dispositif cible (3) qui a effectué avec succès la transmission à partir de la pluralité de dispositifs cibles (3) et en effectuant à nouveau l'étape de transmission et l'étape de détermination.

11. Procédé selon la revendication 1, comprenant les étapes qui consistent :
à préparer une pluralité de pièces de nouvelles données de réglage pour la pluralité de dispositifs cibles (3), respectivement ;
à transmettre la pluralité d'éléments de nouvelles données de réglage à la pluralité de dispositifs cibles (3), respectivement ;
à déterminer si une retransmission de la pluralité d'éléments de nouvelles données de réglage est nécessaire pour chacun de la pluralité de dispositifs cibles (3) sur la base d'un résultat de l'étape de transmission ; et
à retransmettre l'un parmi la pluralité d'éléments de nouvelles données de réglage à au moins un dispositif cible (3) qui est déterminé comme ayant besoin d'une retransmission.

12. Programme informatique pour une utilisation sur un ordinateur, le programme informatique étant agencé pour mettre en oeuvre le procédé de transmission de données de réglage de l'une quelconque des revendications 1 à 10 lorsque ledit programme informatique est exécuté sur un ordinateur.

13. Dispositif terminal (1A) pour transmettre des données de réglage à une pluralité de dispositifs cibles (3) comprenant :
un système de transmission (108) configuré pour transmettre des nouvelles données de réglage à chacun de la pluralité de dispositifs cibles (3), obtenir un résultat de la transmission comportant des conditions d'erreur de dispositifs cibles respectifs (3) qui n'ont pas reçu avec succès les nouvelles données de réglage dans la transmission et classer les conditions d'erreur dans un type de groupe parmi un premier type de groupe ayant une propriété selon laquelle un utilisateur peut résoudre la condition d'erreur et un deuxième type de groupe ayant une propriété selon laquelle l'utilisateur ne peut pas résoudre la condition d'erreur ;
un système de détermination (101) configuré pour déterminer si une retransmission des nouvelles données de réglage est nécessaire pour chacun de la pluralité de dispositifs cibles (3) sur la base d'un résultat de la transmission par le système de transmission (108), où un dispositif cible (3) ayant la condition d'erreur du premier type de groupe est déterminé comme ayant besoin d'une retransmission ; et
un système de retransmission (108) configuré pour retransmettre les nouvelles données de réglage à au moins un dispositif cible (3) qui est déterminé comme ayant besoin d'une retransmission.

14. Dispositif terminal selon la revendication 13, comprenant en outre un système de sélection (101, 105, 106) qui permet à un utilisateur de sélectionner la pluralité de dispositifs cibles (3) parmi une pluralité de dispositifs cibles (3).

15. Système pour transmettre des données de réglage à une pluralité de dispositifs cibles (3), comprenant :
un système de transmission (108) configuré pour transmettre des nouvelles données de réglage à chacun de la pluralité de dispositifs cibles (3), obtenir un résultat de la transmission comportant des conditions d'erreur de dispositifs cibles respectifs (3) qui n'ont pas reçu avec succès les nouvelles données de réglage dans la transmission et classer les conditions d'erreur dans un type de groupe parmi un premier type de groupe ayant une propriété selon laquelle un utilisateur peut résoudre la condition d'erreur et un deuxième type de groupe ayant une propriété selon laquelle l'utilisateur ne peut pas résoudre la condition d'erreur ;
un système de détermination (101) configuré pour déterminer si une retransmission des nouvelles données de réglage est nécessaire pour chacun de la pluralité de dispositifs cibles (3) sur la base d'un résultat de la transmission par le système de transmission (108), où un dispositif cible (3) ayant la condition d'erreur du premier type de groupe est déterminé comme ayant besoin d'une retransmission ; et
un système de retransmission (108) configuré pour retransmettre les nouvelles données de réglage à au moins un dispositif cible (3) qui est déterminé comme ayant besoin d'une retransmission.

16. Système selon la revendication 19, comprenant en outre un système de sélection (101, 105, 106) qui permet à un utilisateur de sélectionner la pluralité de dispositifs cibles (3) parmi une pluralité de dispositifs cibles (3) connectés au réseau.
